# EUROPÄISCHE PATENTANMELDUNG

(11) **EP 4 163 783 A1**
(43) Veröffentlichungstag der Anmeldung: **12.04.2023**
(21) Anmeldenummer: 22200062.2
(22) Anmeldetag: 06.10.2022
(51) Int. Cl.: G06F 3/14, H04N 5/222, H04N 5/262, H04N 23/90

(54) **HINTERGRUND-WIEDERGABEEINRICHTUNG**

(30) Priorität: 11.10.2021 DE 102021126312
(71) Anmelder: Arnold & Richter Cine Technik GmbH & Co. Betriebs KG, 80807 München (DE)
(72) Erfinder: POPP, Hermann, 81547 München (DE)
(74) Vertreter: Manitz Finsterwald Patent- und Rechtsanwaltspartnerschaft mbB

(57) **Zusammenfassung**

Eine Hintergrund-Wiedergabeeinrichtung für ein virtuelles Bildaufnahmestudio zum Wiedergeben einer Darstellung eines virtuellen Hintergrunds hinter einem realen Motiv umfasst eine Steuereinrichtung, welche eine einzige erste Steuereinheit und zumindest eine zweite Steuereinheit umfasst. Die erste Steuereinheit ist dazu ausgebildet, den virtuellen Hintergrund zu generieren, eine Projektion des virtuellen Hintergrunds auf die aktive Beleuchtungseinrichtung zu ermitteln und zumindest einen Abschnitt der ermittelten Projektion an die zumindest eine zweite Steuereinheit zu übermitteln. Die zumindest eine zweite Steuereinheit ist dazu ausgebildet, die aktive Beleuchtungseinrichtung zum Darstellen des zumindest einen Abschnitts der ermittelten Projektion des virtuellen Hintergrunds anzusteuern.

## Beschreibung

Die Erfindung betrifft eine Hintergrund-Wiedergabeeinrichtung für ein virtuelles Bildaufnahmestudio, welche dazu ausgebildet ist, für eine Aufnahme mittels einer zugeordneten Kamera hinter einem realen Motiv eine Darstellung eines virtuellen Hintergrunds wiederzugeben.

Derartige Hintergrund-Wiedergabeeinrichtungen können insbesondere dazu vorgesehen sein, in einem Bildaufnahmestudio eine Landschaft oder eine Umgebung wiederzugeben, in welcher eine Aufnahme mittels einer zugeordneten Kamera erfolgen soll und welche einen virtuellen Hintergrund für eine aufzunehmende Szene bildet. Dabei kann es sich bei dem Bildaufnahmestudio beispielsweise um ein Filmstudio zum Aufnehmen von Bewegtbildsequenzen oder um ein Fotostudio handeln, in welchem Einzelbilder bzw. Stillbilder aufgenommen werden. Generell kann eine derartige Aufnahme ein lokales Speichern von Bilddaten oder eine Übertragung an einen entfernten Ort (z.B. Broadcast, Streaming) umfassen. In dem virtuellen Bildaufnahmestudio kann somit ein virtueller Hintergrund bzw. eine virtuelle Umgebung geschaffen werden, in welcher sich ein Schauspieler während einer Bewegtbildaufnahme bewegen oder welche einen Hintergrund für eine Stillbildaufnahme bilden kann. Der im vorliegenden Zusammenhang genannte virtuelle Hintergrund umfasst also Bildinformation, die ein Hintergrundmotiv repräsentiert und die von einer zugeordneten Kamera als scheinbar reale Umgebung einer (Vordergrund-) Szene unmittelbar aufgenommen werden kann. Die Darstellung des virtuellen Hintergrunds "hinter" einem realen Motiv ist in diesem Zusammenhang umfassend zu verstehen, da die virtuelle Umgebung auch oberhalb oder unterhalb des realen Motivs vorgesehen sein kann.

Beispielsweise bei Bewegtbildaufnahmen kann eine Hintergrund-Wiedergabeeinrichtung zum Wiedergeben einer Darstellung eines virtuellen Hintergrunds zum Einsatz kommen, um eine Szene unmittelbar in der vorgesehenen Umgebung aufnehmen zu können. Insbesondere kann dadurch das Schauspiel erleichtert werden, da etwaige in dem virtuellen Hintergrund ablaufende Ereignisse von einem Schauspieler wahrgenommen werden können und der Schauspieler auf diese Ereignisse reagieren kann. Anders als beispielsweise bei der Verwendung eines Green-Screen, bei welchem die Umgebung für den Schauspieler nicht sichtbar ist, kann der Schauspieler sein Schauspiel somit an etwaige Hintergrundgeschehnisse anpassen und ein Regisseur, eine Kameraperson oder sonstige an einem Dreh beteiligte Personen kann bzw. können bereits während des Drehs einen Gesamteindruck der Szene gewinnen und die Szene beurteilen. Zudem können die gesamte Szene oder ein entsprechender Ausschnitt eines Films unmittelbar nach der Aufnahme angesehen und überprüft werden, ohne dass der für die Szene vorgesehene Hintergrund noch überlagert werden muss.

Bei Stillbildaufnahmen kann eine derartige Hintergrund-Wiedergabeeinrichtung beispielsweise dazu genutzt werden, in einem Bildaufnahmestudio und somit in einem kontrollierbaren Umfeld Fotografien in grundsätzlich beliebigen Umgebungen aufnehmen zu können und während des Fotografierens das entstehende Bild vollständig im Blick zu haben. Der Hintergrund und das reale Motiv bzw. eine zu fotografierende Person können somit optimal aufeinander abgestimmt werden bzw. zusammenwirken. Zudem kann das aufgenommene Foto unmittelbar angesehen werden, um gegebenenfalls erforderliche Anpassungen vornehmen zu können.

Zum Wiedergeben der Darstellung des virtuellen Hintergrunds können Hintergrund-Wiedergabeeinrichtungen insbesondere ein elektronisches Display mit einer aktiven Pixelmatrix bilden oder aufweisen und beispielsweise eine aktive Beleuchtungseinrichtung mit einer Vielzahl von Leuchtelementen umfassen. Beispielsweise kann zur Wiedergabe einer Darstellung eines virtuellen Hintergrunds in einem virtuellen Bildaufnahmestudio eine LED-Wand zum Einsatz kommen, deren Leuchtdioden individuell und/oder in Gruppen benachbarter Leuchtdioden bzw. in Arrays von Leuchtdioden ansteuerbar sein können. Leuchtdioden einer solchen LED-Wand können als beispielsweise als LED (Light Emitting Diode) oder als OLED (Organic Light Emitting Diode bzw. organische Leuchtdiode) vorgesehen sein. Ferner können die Leuchtdioden Teil einer Flüssigkristallanzeige sein. Derartige Hintergrund-Wiedergabeeinrichtungen können sich beispielsweise über eine Breite von mindestens 5 m und eine Höhe von mindestens 2 m erstrecken, um mehrere Schauspieler vor einem gemeinsamen (virtuellen) Hintergrund aufnehmen zu können.

Darüber hinaus können Hintergrund-Wiedergabeeinrichtungen mehrere Paneele umfassen, an welchen die Bildpunktelemente angeordnet sind und welche gemeinsam die LED-Wand bilden. Während die Paneele, für welche auch der Begriff Panel geläufig ist, im Wesentlichen zweidimensional ausgebildet sein und sich die an einem Paneel angeordneten Bildpunktelemente in einer flächigen Anordnung erstrecken können, kann durch eine geeignete Anordnung mehrerer Paneele beispielsweise erreicht werden, dass die Hintergrund-Wiedergabeeinrichtung abschnittsweise gekrümmt und/oder gewölbt ausgebildet ist. Dadurch kann die Hintergrund-Wiedergabeeinrichtung beispielsweise sowohl hinter als auch über oder unter dem realen Motiv in dem virtuellen Bildaufnahmestudio angeordnet werden, um auch das unmittelbare Aufnehmen einer Darstellung eines virtuellen Himmels, oder einer virtuellen Decke eines Raums oder eines virtuellen Bodens in dem Bildaufnahmestudio zu ermöglichen. Alternativ zu einer LED-Wand kann eine Darstellung eines virtuellen Hintergrunds grundsätzlich auch durch Lichtpunkte erzeugt werden, die durch Reflektion oder Transmission an einer Lichtquellen-Wand, beispielsweise einer Leinwand für eine Rückprojektion, erzeugt werden. Die aktive Lichterzeugung kann dazu durch einen Projektor erfolgen, wobei an der Leinwand die Lichtquellen lediglich indirekt gebildet sind.

Insbesondere kann es eine derartige Hintergrund-Wiedergabeeinrichtung ermöglichen, durch entsprechendes Ansteuern der Bildpunktelemente einen virtuellen Hintergrund bildlich dazustellen und/oder durch Verändern der Ansteuerung während einer Aufnahme anzupassen. Der im vorliegenden Zusammenhang genannte virtuelle Hintergrund kann insbesondere ein Hintergrundmotiv repräsentieren, dessen Darstellung von einer zugeordneten Kamera als scheinbar reale Umgebung einer (Vordergrund-)Szene unmittelbar aufgenommen werden kann. Eine Hintergrund-Wiedergabeeinrichtung bietet somit eine Möglichkeit, einen virtuellen Hintergrund für eine aufzunehmende Szene lebendig und leicht anpassbar darzustellen und dadurch insbesondere das Schauspiel oder die Gestik zu erleichtern.

Um an einer solchen Hintergrund-Wiedergabeeinrichtung eine Darstellung eines virtuellen Hintergrunds, der insbesondere eine dreidimensionale Szene repräsentieren kann, wiedergeben zu können, ist es zumeist vorgesehen, dass der virtuelle Hintergrund von einem sogenannten 3D-Rechner generiert wird, der den virtuellen Hintergrund beispielsweise anhand eines dreidimensionalen Modells erstellen kann. Alternativ dazu kann ein virtueller Hintergrund beispielsweise auch an einer Schnittstelle oder einem Interface, etwa einem DVD-Player, eingelesen werden.

Der generierte oder eingelesene virtuelle Hintergrund kann sodann von dem 3D-Rechner und/oder der Schnittstelle an eine zentrale Steuerung der Hintergrund-Wiedergabeeinrichtung übermittelt werden, welche den virtuellen Hintergrund zur Wiedergabe an der Hintergrund-Wiedergabeeinrichtung aufbereiten kann. Insbesondere kann eine solche zentrale Steuerung der Hintergrund-Wiedergabeeinrichtung den empfangenen virtuellen Hintergrund auf die Hintergrund-Wiedergabeeinrichtung abbilden oder projizieren und dadurch eine Darstellung des virtuellen Hintergrunds erzeugen, die an der Hintergrund-Wiedergabeeinrichtung wiedergegeben werden kann. Ferner kann die zentrale Steuerung dazu ausgebildet sein, den virtuellen Hintergrund in verschiedene Abschnitte einzuteilen, welche an verschiedenen Orten der Hintergrund-Wiedergabeeinrichtung wiedergegeben werden können. Nach dem Aufbereiten des virtuellen Hintergrunds kann die zentrale Steuereinrichtung die ermittelte Projektion des virtuellen Hintergrunds oder Abschnitte der Projektion an weitere Steuereinrichtungen übermitteln, welche beispielsweise dazu ausgebildet sein können, einzelne Bildpunktelemente, insbesondere Leuchtdioden, der Hintergrund-Wiedergabeeinrichtung zum Wiedergeben eines jeweiligen Abschnitts der Darstellung des virtuellen Hintergrunds anzusteuern.

Eine solche Steuerung der Hintergrund-Wiedergabeeinrichtung, welche eine Vielzahl einzelner Steuereinrichtungen umfasst, die jeweilige Funktionen wahrnehmen, gestaltet sich jedoch verhältnismäßig kompliziert und unübersichtlich. Beispielsweise müssen die von dem 3D-Rechner generierten Daten, die den virtuellen Hintergrund repräsentieren, zunächst an die zentrale Steuerung der Hintergrund-Wiedergabeeinrichtung übermittelt werden, wozu die Daten insbesondere kodiert werden müssen. Die kodierten Daten müssen an der zentralen Steuerung empfangen und dekodiert werden, um die Projektion auf die Hintergrund-Wiedergabeeinrichtung ermitteln und die Daten für eine Wiedergabe an der Hintergrund-Wiedergabeeinrichtung aufbereiten zu können. Die ermittelte Projektion oder entsprechende Bilddaten müssen daraufhin wiederum kodiert und weitergeleitet werden, um die Darstellung des virtuellen Hintergrunds wiedergeben zu können. Diese Vielzahl von erforderlichen Datenübertragungen von der Generierung des virtuellen Hintergrunds bis zur Wiedergabe an der Hintergrund-Wiedergabeeinrichtung erfordert insbesondere hohe Datenübertragungsraten sowie eine hohe Rechenleistung zum jeweiligen Kodieren und Dekodieren der Daten, wodurch die Steuerung der Hintergrund-Wiedergabeeinrichtung erschwert und verlangsamt werden kann. Zudem ist die exakte Art der Prozessierung der Daten bei einer solchen Steuerung und Übertragung häufig schwer nachzuvollziehen, so dass etwaige in der Wiedergabe der Darstellung entstehende Fehler oftmals nur mit hohem Aufwand nachvollzogen und entsprechend durch Anpassen der Steuerung behoben werden können.

Es ist daher eine Aufgabe der Erfindung, eine Hintergrund-Wiedergabeeinrichtung mit einer vereinfachten und schnelleren Steuerung zu schaffen.

Diese Aufgabe wird gelöst durch eine Hintergrund-Wiedergabeeinrichtung mit den Merkmalen des Anspruchs 1.

Die Hintergrund-Wiedergabeeinrichtung weist eine aktive Beleuchtungseinrichtung, welche ein Paneel oder mehrere Paneele aufweist, wobei das Paneel, oder die mehreren Paneele gemeinsam, eine Vielzahl von Bildpunktelementen in einer zumindest zweidimensionalen Anordnung umfasst bzw. umfassen. Die Hintergrund-Wiedergabeeinrichtung weist eine Steuereinrichtung auf, wobei die Steuereinrichtung eine einzige erste Steuereinheit und zumindest eine zweite Steuereinheit umfasst. Die erste Steuereinheit ist dazu ausgebildet, den virtuellen Hintergrund zu generieren, eine Projektion des virtuellen Hintergrunds auf die aktive Beleuchtungseinrichtung zu ermitteln und zumindest einen Abschnitt der ermittelten Projektion an die zumindest eine zweite Steuereinheit zu übermitteln. Die zumindest eine zweite Steuereinheit ist dazu ausgebildet, die aktive Beleuchtungseinrichtung zum Darstellen des zumindest einen Abschnitts der ermittelten Projektion des virtuellen Hintergrunds anzusteuern.

Bei dieser Hintergrund-Wiedergabeeinrichtung ist somit vorgesehen, dass eine einzige erste Steuereinheit sowohl die Funktion eines 3D-Rechners einer herkömmlichen Hintergrund-Wiedergabeeinrichtung erfüllt - den virtuellen Hintergrund zu generieren - als auch die Funktionen der herkömmlicherweise vorgesehenen zentralen Steuerung übernimmt, nämlich den virtuellen Hintergrund für eine Wiedergabe an der Hintergrund-Wiedergabeeinrichtung aufzubereiten. Insbesondere kann es vorgesehen sein, den virtuellen Hintergrund unmittelbar in der zentralen Steuerung der Hintergrund-Wiedergabeeinrichtung zu generieren, welche insofern von der ersten Steuereinheit gebildet sein kann.

Die einzige erste Steuereinheit kann insbesondere eine geschlossene Baueinheit bilden. Beispielsweise kann die erste Steuereinheit von einer einzigen Hardwarekomponente gebildet sein oder mehrere von in einem einzigen gemeinsamen Gehäuse, beispielsweise einem Gehäuse eines Rechners oder Computers, eingehauste Hardwarekomponenten umfassen. Insbesondere kann somit die erste Steuereinheit ausschließlich Hardwarekomponenten umfassen, die von einem einzigen gemeinsamen Gehäuse umgeben sind, ohne dass zwischen den Komponenten der einzigen ersten Steuereinheit freiliegende, nicht eingehauste Verbindungen bestehen.

Die einzige erste Steuereinheit kann beispielsweise von einem Mikroprozessor gebildet sein oder mehrere Mikroprozessoren umfassen, wobei die einzelnen Funktionen und/oder Prozessschritte, welche von der ersten Steuereinheit ausgeführt werden, beispielsweise auf verschiedene Mikroprozessoren aufgeteilt sein können. Bei einer Ausbildung mit mehreren Mikroprozessoren können diese jedoch in einem einzigen gemeinsamen Gehäuse eingehaust sein.

Bei anderen Ausführungsformen kann die erste Steuereinheit jedoch - zumindest teilweise - in einem externen Rechenzentrum ausgebildet sein (physisch oder beispielsweise als virtuelle Maschine).

Die jeweilige zweite Steuereinheit kann beispielsweise einen Mikrocontroller umfassen, der insbesondere eine Paneel-Steuerung bzw. einen Panel Controller bilden kann. Die jeweilige zweite Steuereinheit ist von der ersten Steuereinheit separat ausgebildet, d.h. als getrennte physische Einheit. Die jeweilige zweite Steuereinheit kann von der ersten Steuereinheit räumlich entfernt angeordnet sein. Sofern die Hintergrund-Wiedergabeeinrichtung mehrere Paneele aufweist, kann eine entsprechende Anzahl von zweiten Steuereinheiten vorgesehen sein, die einem jeweiligen der mehreren Paneele zugeordnet sind, wie nachfolgend noch erläutert wird. Sofern die Hintergrund-Wiedergabeeinrichtung mehrere zweite Steuereinheiten aufweist, können die zweiten Steuereinheiten insbesondere an oder in räumlicher Nähe zu einem jeweiligen Paneel angeordnet sein.

Insbesondere kann die erste Steuereinheit dazu ausgebildet sein, zum Ermitteln einer Projektion des virtuellen Hintergrunds auf die aktive Beleuchtungseinrichtung Bilddaten zu ermitteln, welche die Projektion repräsentieren. Bei dem generierten virtuellen Hintergrund kann es sich insbesondere um einen dreidimensionalen virtuellen Hintergrund handeln, welcher jedoch auf die aktive Beleuchtungseinrichtung und die beispielsweise zweidimensionale Anordnung der Vielzahl von Bildpunktelementen projiziert werden muss, um eine Wiedergabe einer Darstellung des virtuellen Hintergrunds an der Hintergrund-Wiedergabeeinrichtung zu ermöglichen. Die aktive Beleuchtungseinrichtung kann dazu ausgebildet sein, die von der ersten Steuereinheit ermittelten und an die zumindest eine zweite Steuereinheit übermittelten Bilddaten infolge einer Ansteuerung durch die zweite Steuereinheit wiederzugeben, so dass die räumliche Auflösung der Darstellung des virtuellen Hintergrunds insbesondere der Anordnung der Bildpunktelemente an der Hintergrund-Wiedergabeeinrichtung entsprechen kann. Insofern kann die Projektion des virtuellen Hintergrunds auf die aktive Beleuchtungseinrichtung das Generieren von jeweiligen Bildinformationen für die Bildpunktelemente der aktiven Beleuchtungseinrichtung umfassen, welche beispielsweise eine Helligkeit und/oder einen Farbwert eines jeweiligen Bildpunktelements festlegen können. Insbesondere können die Bildpunktelemente zum Wiedergeben der jeweiligen Bildinformation aktiv leuchtend und/oder individuell oder in Gruppen von Bildpunktelementen mittels der zweiten Steuereinheit ansteuerbar sein.

Ferner kann die erste Steuereinheit dazu ausgebildet sein, zum Übermitteln zumindest eines Abschnitts der ermittelten Projektion zumindest einen Teil der Bilddaten an die zumindest eine zweite Steuereinheit zu übermitteln, welche die Projektion repräsentieren. Grundsätzlich kann die Hintergrund-Wiedergabeeinrichtung beispielsweise nur ein einziges, relativ zu einem Schauspieler beispielsweise großes, Paneel aufweisen, wobei die Hintergrund-Wiedergabeeinrichtung jedoch auch mehrere zusammengesetzte Paneele umfassen kann. Der zumindest eine Abschnitt, welchen die erste Steuereinheit an die zweite Steuereinheit übermittelt, kann daher der gesamten Projektion des virtuellen Hintergrunds auf die auf die aktive Beleuchtungseinrichtung entsprechen, um diesen Abschnitt bzw. die Projektion an einem einzigen Paneel darstellen zu können. Der zumindest eine Abschnitt kann jedoch auch lediglich einem Teil der Projektion entsprechen, welcher an einem der zweiten Steuereinheit zugeordneten Paneel wiedergegeben wird. Für solche Paneele einer Hintergrund-Wiedergabeeinrichtung ist auch die englischsprachige Bezeichnung "Panel" geläufig.

Indem somit eine einzige erste Steuereinheit vorgesehen ist, welche sowohl den virtuellen Hintergrund generiert als auch die Projektion des virtuellen Hintergrunds auf die aktive Beleuchtungseinrichtung ermittelt, kann die Steuerung der Hintergrund-Wiedergabeeinrichtung vereinfacht und die Datenprozessierung von dem Generieren des virtuellen Hintergrunds bis zur letztlichen Wiedergabe der Darstellung des virtuellen Hintergrunds nachvollziehbar und überprüfbar gestaltet werden. Zudem können Übertragungswege zur Übertragung der den virtuellen Hintergrund repräsentierenden Daten minimiert werden, indem diese nicht, wie bei herkömmlichen Hintergrund-Wiedergabeeinrichtungen, zunächst generiert, dann beispielsweise zu einem gemeinsamen Datensatz zusammengefügt oder kodiert und an die zentrale Steuerung der Hintergrund-Wiedergabeeinrichtung übermittelt werden müssen, um von der zentralen Steuerung erst empfangen und dekodiert werden zu müssen, bevor das Ermitteln der Projektion auf die aktive Beleuchtungseinrichtung überhaupt beginnen kann. Zudem kann es bei herkömmlichen Steuerungen von Hintergrund-Wiedergabeeinrichtungen erforderlich sein, dass der von dem 3D-Rechner generierte virtuelle Hintergrund vor einer Übertragung an die zentrale Steuerung komprimiert werden muss, um die Übertragung zu ermöglichen. Entsprechend kann an der zentralen Steuerung ein zusätzlicher Rechenaufwand entstehen, um die den virtuellen Hintergrund repräsentierenden Daten wieder zu dekomprimieren. Durch die Konzentration der Funktionen des Generierens des virtuellen Hintergrunds und des Ermittelns der Projektion und/oder des Aufbereitens des virtuellen Hintergrunds für eine Wiedergabe an der Hintergrund-Wiedergabeeinrichtung in der einzigen ersten Steuereinheit können solche aufwendigen Datenübertragungen hingegen vermieden werden, so dass die Steuerung der Hintergrund-Wiedergabeeinrichtung insgesamt effizienter und schneller erfolgen kann.

Weitere Ausführungsformen sind den abhängigen Ansprüchen, der Beschreibung sowie den Zeichnungen zu entnehmen.

Bei einigen Ausführungsformen kann die aktive Hintergrund-Wiedergabeeinrichtung als eine LED-Wand ausgebildet sein, die eine Vielzahl von Leuchtdioden aufweist, welche die Bildpunktelemente bilden.

Bei einigen Ausführungsformen können die Hintergrund-Wiedergabeeinrichtung als eine LED-Wand und die Bildpunktelemente als Leuchtdioden oder Leuchtdiodeneinheiten ausgebildet sein. Die Leuchtdioden einer solchen LED-Wand können beispielsweise als LED (Light Emitting Diode) oder als organische Leuchtdioden bzw. OLED (Organic Light Emitting Diode) ausgebildet sein. Ferner kann es bei einer LED-Wand vorgesehen sein, dass die einzelnen Bildpunktelemente, welche gemeinsam die Darstellung des virtuellen Hintergrunds erzeugen, von einzelnen Leuchtdioden gebildet sind. Die einzelnen Bildpunktelemente können jedoch auch von jeweiligen Leuchtdiodeneinheiten gebildet sein, wobei jede Leuchtdiodeneinheit insbesondere mehrere, insbesondere drei, Leuchtdioden umfassen kann. Beispielsweise kann eine Leuchtdiodeneinheit auch drei, vier oder mehr Leuchtdioden umfassen, wobei die mehreren Leuchtdioden einer Leuchtdiodeneinheit insbesondere unterschiedliche Emissionsspektren aufweisen können und optional mit einem Farbmischer ausgestattet sein können. Ferner kann es bei einer solchen Leuchtdiodeneinheit vorgesehen sein, dass die einzelnen Leuchtdioden der Leuchtdiodeneinheit selektiv ansteuerbar sind, um eine gewünschte Farbe des von der Leuchtdiodeneinheit gebildeten Bildpunktelements zu erzeugen. Insbesondere kann eine Leuchtdiodeneinheit eine rotes Licht emittierende Leuchtdiode, eine grünes Licht emittierende Leuchtdiode und eine blaues Licht emittierende Leuchtdiode umfassen.

Bei einigen Ausführungsformen kann es ferner vorgesehen sein, dass die Bildpunktelemente individuell ansteuerbar sind, um die Darstellung des virtuellen Hintergrunds zu erzeugen. Insbesondere kann durch das Ansteuern der Bildpunktelemente eine jeweilige Farbe und/oder Helligkeit des Bildpunktelements einstellbar sein, um einen durch das jeweilige Bildpunktelement wiedergegebenen Abschnitt oder Punkt der Darstellung des virtuellen Hintergrunds auf die vorgesehene Farbe und/oder Helligkeit einstellen zu können.

Die Hintergrund-Wiedergabeeinrichtung kann sich bei einigen Ausführungsformen in einer vertikalen und/oder horizontalen Ausrichtung erstrecken, insbesondere mit kontinuierlichen oder quasi-kontinuierlichen Übergängen. Beispielsweise kann es vorgesehen sein, dass sich die Hintergrund-Wiedergabeeinrichtung in einer vertikalen Ausrichtung plan hinter dem realen Motiv erstreckt, um die Darstellung des virtuellen Hintergrunds hinter dem realen Motiv wiederzugeben. Alternativ oder zusätzlich kann es jedoch auch vorgesehen sein, dass sich die Hintergrund-Wiedergabeeinrichtung zumindest abschnittsweise in einer horizontalen Ausrichtung erstreckt, so dass die Darstellung des virtuellen Hintergrunds beispielsweise auch über dem realen Motiv wiedergegeben werden kann. Zudem kann die Hintergrund-Wiedergabeeinrichtung dazu ausgebildet sein, das reale Motiv zu umgeben und zu überdecken, um eine möglichst vollständige Wiedergabe des virtuellen Hintergrunds über einen großen Winkelbereich zu ermöglichen. In einem Abschnitt, in welchem die Hintergrund-Wiedergabeeinrichtung von einer vertikalen in eine horizontale Ausrichtung übergeht, kann die Hintergrund-Wiedergabeeinrichtung auch gewölbt und/oder gekrümmt sein. Insbesondere bei einer Zusammensetzung der Hintergrund-Wiedergabeeinrichtung aus mehreren Paneelen können die Paneele zu verschiedenen und beispielsweise gewölbeartigen Geometrien zusammengesetzt sein, um eine gewünschte Umgebung für eine Aufnahme in dem virtuellen Bildaufnahmestudio zu schaffen. Ferner kann es bei einigen Ausführungsformen vorgesehen sein, dass die Hintergrund-Wiedergabeeinrichtung abschnittsweise an einem Boden des virtuellen Bildaufnahmestudios angeordnet ist. Auch in solchen Abschnitten kann sich die Hintergrund-Wiedergabeeinrichtung insbesondere in einer horizontalen Ausrichtung erstrecken.

Die Hintergrund-Wiedergabeeinrichtung kann bei einigen Ausführungsformen ferner dazu ausgebildet sein, das reale Motiv zu beleuchten. Insbesondere kann dies Hintergrund-Wiedergabeeinrichtung dazu dienen, das reale Motiv zusätzlich zu einer sonstigen Beleuchtung des virtuellen Bildaufnahmestudios zu beleuchten. Beispielsweise kann dadurch erreicht werden, dass des reale Motiv einen zu erwarteten Schatten wirft, wenn in dem virtuellen Hintergrund Beleuchtungsquellen, beispielsweise eine Straßenlaterne, enthalten ist, indem von der wiedergegebenen Darstellung der Straßenlaterne des virtuellen Hintergrunds die von einer realen Straßenlaterne zu erwartende Beleuchtung des realen Motivs ausgeht. Die Hintergrund-Wiedergabeeinrichtung kann jedoch auch dazu ausgebildet sein, abschnittsweise Licht zur Beleuchtung einer Szene zu emittieren und gewissermaßen als Scheinwerfer zu fungieren, während die Hintergrund-Wiedergabeeinrichtung an anderen Abschnitten die Darstellung des virtuellen Hintergrunds wiedergeben kann.

Bei einigen Ausführungsformen kann die Hintergrund-Wiedergabeeinrichtung dazu ausgebildet sein, die Darstellung des virtuellen Hintergrunds während der Aufnahme zeitlich zu variieren. Insbesondere können dadurch in dem virtuellen Hintergrund ablaufende Ereignisse während einer Kameraaufnahme unmittelbar mittels der Hintergrund-Wiedergabeeinrichtung wiedergegeben werden, so dass ein Schauspieler, anders als beispielsweise bei einer Greenscreen-Aufnahme, auf diese Ereignisse reagieren und das Schauspiel darauf abstimmen kann. Die Hintergrund-Wiedergabeeinrichtung kann folglich insbesondere dazu ausgebildet sein, während der Kameraaufnahme eine Filmsequenz wiederzugeben, welche von der Kamera unmittelbar aufgezeichnet werden kann. Ein nachträgliches Überlagern der Aufnahme der Kamera mit einem vorgesehenen Hintergrund ist somit nicht mehr erforderlich.

Die erste Steuereinheit kann bei einigen Ausführungsformen dazu ausgebildet sein, den virtuellen Hintergrund auf die aktive Beleuchtungseinrichtung zu skalieren.

Beispielsweise kann der von der ersten Steuereinheit generierte virtuelle Hintergrund Positionen und/oder Größen von Objekten eines dem virtuellen Hintergrund entsprechenden realen Hintergrunds umfassen, etwa von Objekten einer durch den virtuellen Hintergrund repräsentierten Landschaft. Eine solche dreidimensionale Landschaft muss entsprechend einerseits auf die aktive Beleuchtungseinrichtung und beispielsweise eine zweidimensionale Anordnung der Bildpunktelemente projiziert werden. Andererseits kann zusätzlich eine Skalierung auf die gegenüber den Größen von Objekten in dem virtuellen Hintergrund kleinere Hintergrund-Wiedergabeeinrichtung und/oder auf das zumindest eine Paneel erforderlich sein. Insofern kann die erste Steuereinheit beispielsweise dazu ausgebildet sein, den generierten virtuellen Hintergrund, insbesondere einen dreidimensionalen virtuellen Hintergrund, zunächst auf die Anordnung der Bildpunktelemente der aktiven Beleuchtungseinrichtung zu projizieren, um die ermittelten Projektion sodann auf die Dimensionen der Hintergrund-Wiedergabeeinrichtung und/oder der aktiven Beleuchtungseinrichtung zu skalieren. Daraufhin kann die erste Steuereinheit dazu ausgebildet sein, anhand der skalierten Projektion des virtuellen Hintergrunds jeweilige Bildinformationen für die Bildpunktelementen und/oder jeweilige Abschnitte der Darstellung des virtuellen Hintergrunds zu generieren, um die derart aufbereiteten Bilddaten an die zweite Steuereinheit zu übermitteln.

Es kann zudem vorgesehen sein, dass die erste Steuereinheit dazu ausgebildet ist, die ermittelte Projektion auf eine räumliche Auflösung der Bildpunktelemente der aktiven Beleuchtungseinrichtung abzubilden, um jeweilige Bildinformationen für die einzelnen Bildpunktelemente und/oder Gruppen von Bildpunktelementen zu erzeugen. Die erste Steuereinheit kann auch dazu ausgebildet sein, beispielsweise verschiedene räumliche Auflösungen der Anordnung der Bildpunktelemente zu berücksichtigen, so dass die erste Steuereinheit mit verschiedenen Paneelen und/oder aktiven Beleuchtungseinrichtungen kompatibel sein kann.

Die zumindest eine zweite Steuereinheit kann bei einigen Ausführungsformen dazu ausgebildet sein, eine Information über eine Geometrie und/oder Anordnung des Paneels oder der mehreren Paneele der Hintergrund-Wiedergabeeinrichtung an die erste Steuereinheit zu übermitteln. Ferner kann die erste Steuereinheit dazu ausgebildet sein, den zumindest einen Abschnitt der ermittelten Projektion des virtuellen Hintergrunds in Abhängigkeit von der Information anzupassen.

Beispielsweise kann die zumindest eine zweite Steuereinheit dazu ausgebildet sein, eine Information über Abmessungen des zumindest einen Paneels, über eine Position des zumindest einen Paneels im Raum und/oder eine Ausrichtung des zumindest einen Paneels, beispielsweise eine Neigung des zumindest eine Paneels gegenüber der Vertikalen, an die erste Steuereinheit zu übermitteln. Die erste Steuereinheit kann dazu ausgebildet sein, die übermittelte Information zu berücksichtigen, um beispielsweise die ermittelte Projektion des virtuellen Hintergrunds auf die Abmessungen des zumindest einen Paneels zu skalieren. Ferner kann die erste Steuereinheit dazu ausgebildet sein, beim Ermitteln der Projektion eine Neigung des zumindest einen Paneels zu berücksichtigen. Auch eine Anordnung und/oder Anzahl der Bildpunktelemente des Paneels oder der mehreren Paneele kann von der zumindest einen zweiten Steuereinheit an die erste Steuereinheit als eine Information über eine Geometrie des zumindest einen Paneels übermittelbar sein, so dass die erste Steuereinheit insbesondere eine Auflösung des zumindest einen Paneels bei dem Ermitteln der Projektion und/oder einem Skalieren des virtuellen Hintergrunds berücksichtigen kann.

Zudem kann die erste Steuereinheit insbesondere bei Ausführungsformen der Hintergrund-Wiedergabeeinrichtung, bei welchen die aktive Beleuchtungseinrichtung mehrere Paneele umfasst, dazu ausgebildet sein, die jeweiligen an den einzelnen Paneelen wiederzugebenden Abschnitte in Abhängigkeit von einer Anordnung der Paneele zu ermitteln und an die zumindest eine zweite Steuereinheit und/oder jeweilige den Paneelen zugeordnete zweite Steuereinheiten zu übermitteln. Ausführungsformen der Hintergrund-Wiedergabeeinrichtung mit mehreren Paneelen sind auch nachstehend noch näher erläutert. Durch eine Übermittlung einer Information über die Anordnung insbesondere solcher mehrerer Paneele kann beispielsweise erreicht werden, dass ein in der ermittelten Projektion oberer Abschnitt auch an einem oben angeordneten Paneel wiedergegeben wird, wohingegen ein in der Projektion sich unterhalb des oberen Abschnitts anschließender unterer Abschnitt an einem unter dem oben angeordneten Paneel positionierten unteren Paneel wiedergegeben werden kann. Insbesondere kann durch eine solche Informationsübermittlung erreicht werden, dass die erste Steuereinheit flexibel in Kombination mit verschiedenen aktiven Beleuchtungseinrichtungen genutzt werden kann, indem eine Information über eine sich verändernde Anordnung und/oder Anzahl der Paneele der aktiven Beleuchtungseinrichtung von der zumindest einen zweiten Steuereinheit an die erste Steuereinheit übermittelt und von dieser bei dem Ermitteln des zumindest einen Abschnitts berücksichtigt werden kann.

Um eine Übermittlung von Informationen von der zumindest einen zweiten Steuereinheit an die erste Steuereinheit zu ermöglichen, kann die zumindest eine zweite Steuereinheit insbesondere in einem Netzwerk mit der ersten Steuereinheit verknüpft sein. Insbesondere können mehrere zweite Steuereinheiten, die jeweiligen Paneelen der aktiven Beleuchtungseinrichtung zugeordnet sind, mit der ersten Steuereinheit über ein Netzwerk verknüpft sein, um etwa Informationen über die Anordnung und/oder Ausrichtung und/oder Geometrie der mehreren Paneele und/oder eine Anzahl der Paneele der aktiven Beleuchtungseinrichtung an die erste Steuereinheit übermitteln zu können. Die Kommunikation innerhalb eines solchen Netzwerks kann gemäß einem Datenbus-Protokoll erfolgen.

Wie bereits erläutert, kann die erste Steuereinheit durch eine solche Verknüpfung zu einem Netzwerk flexibel zur Ansteuerung verschiedener und/oder anpassbarer aktiver Beleuchtungseinrichtungen genutzt werden, indem eine jeweilige aktuelle Anzahl und/oder Anordnung der Paneele der jeweiligen aktiven Beleuchtungseinrichtung von der ersten Steuereinheit berücksichtigt werden kann. Ein Anpassen der aktiven Beleuchtungseinrichtung kann beispielsweise ein Hinzufügen oder Entfernen von Paneelen umfassen. Die erste Steuereinheit kann dazu ausgebildet sein, das Vorhandensein einer jeweiligen zweiten Steuereinheit in dem Netzwerk automatisch zu erkennen, beispielsweise anhand einer jeweiligen IP-Adresse. Hierdurch kann ein Konfigurieren der Steuereinrichtung der Hintergrund-Wiedergabeeinrichtung vereinfacht werden, nämlich durch ein automatisches Erkennen einer zugehörigen zweiten Steuereinheit (der ein jeweiliges Paneel zugeordnet ist) aufgrund eines Anschließens der zweiten Steuereinheit an das Netzwerk.

Ferner ist es auch möglich, die erste Steuereinheit - zumindest teilweise - in einem externen Rechenzentrum anzuordnen, um auf die Kapazitäten eines solchen Rechenzentrums zurückgreifen zu können, die erste Steuereinheit jedoch über eine Netzwerkverbindung mit der zumindest einen zweiten Steuereinheit zu verknüpfen. Eine solche Verknüpfung kann zunächst das Übermitteln des zumindest einen Abschnitts der Projektion von einer extern angeordneten ersten Steuereinheit an die zumindest eine zweite Steuereinheit ermöglichen, welche in dem virtuellen Bildaufnahmestudio angeordnet sein kann. Gegebenenfalls können zudem die vorstehend genannten Informationen von der zumindest einen zweiten Steuereinheit an eine extern angeordnete erste Steuereinheit übermittelt werden, so dass die externe Steuereinheit die Projektion und/oder den zumindest einen Abschnitt in Abhängigkeit von der konkreten Ausbildung der aktiven Beleuchtungseinrichtung flexibel ermitteln kann. Insbesondere ermöglicht die Konzentration der Funktionen des Generierens des virtuellen Hintergrunds und des Ermittelns der Projektion auf die aktive Beleuchtungseinrichtung in eine einzige erste Steuereinheit somit auch Cloud-basierte Lösungen, in welchen zum Ausführen dieser rechenintensiven Funktionen auf externe Kapazitäten zurückgegriffen werden kann. Durch ein Übermitteln von Informationen hinsichtlich der Anordnung und/oder Geometrie des zumindest einen Paneels, insbesondere mehrerer Paneele, der aktiven Beleuchtungseinrichtung kann eine in einem externen Rechenzentrum angeordnete erste Steuereinheit zudem zum Ansteuern grundsätzlich beliebig ausgebildeter aktiver Beleuchtungseinrichtungen genutzt werden.

Ferner kann die erste Steuereinheit bei einigen Ausführungsformen dazu ausgebildet sein, den virtuellen Hintergrund auf einen Farbraum der aktiven Beleuchtungseinrichtung abzubilden. Beispielsweise kann die aktive Beleuchtungseinrichtung eine Vielzahl von Leuchtdioden umfassen, welche in jeweiligen Gruppen von Leuchtdioden gruppiert sind. Jede dieser Gruppen kann insbesondere eine grünes Licht emittierende Leuchtdiode, eine rotes Licht emittierende Leuchtdiode und eine blaues Licht emittierende Leuchtdiode umfassen, so dass durch eine entsprechende Ansteuerung der Leuchtdioden und/oder eines Farbmischers der jeweiligen Gruppe von Leuchtdioden Licht in einem bestimmten Farbraum von der Gruppe von Leuchtdioden emittiert werden kann. Die erste Steuereinheit kann daher beispielsweise dazu ausgebildet sein, in dem virtuellen Hintergrund enthaltene Farben auf einen solchen, von den Bildpunktelementen erzeugbaren Farbraum abzubilden, um entsprechende Bildinformationen für die Bildpunktelemente generieren zu können. Wiederum kann die erste Steuereinheit insbesondere dazu ausgebildet sein, zunächst eine Projektion des virtuellen Hintergrunds auf die aktive Beleuchtungseinrichtung zu ermitteln, um sodann die Projektion auf einen Farbraum der aktiven Beleuchtungseinrichtung der Hintergrund-Wiedergabeeinrichtung abzubilden. Die zumindest eine zweite Steuereinheit kann auch dazu ausgebildet sein, eine Information über einen Farbraum der aktiven Beleuchtungseinrichtung an die erste Steuereinheit zu übermitteln.

Bei einigen Ausführungsformen kann die erste Steuereinheit dazu ausgebildet sein, über eine Ethernet-Verbindung mit der zumindest einen zweiten Steuereinheit zu kommunizieren.

Eine solche Ethernet-Verbindung kann es insbesondere ermöglichen, grundsätzlich beliebige Datei-Formate mit grundsätzlich beliebigen Datenraten von der ersten Steuereinheit an die zumindest eine zweite Steuereinheit zu übertragen. Zudem kann mittels einer Ethernet-Verbindung zusätzlich zu den Daten, welche die Projektion des virtuellen Hintergrunds repräsentieren, beispielsweise auch eine Zeitinformation übermittelt werden, welche beispielsweise auf Basis von PTP (Position Time Protocol) generiert sein kann. Dies kann insbesondere vorgesehen sein, wenn die Hintergrund-Wiedergabeeinrichtung eine Vielzahl von Paneelen umfasst und zeitgleich an den Paneelen ein jeweiliger Abschnitt der Darstellung des virtuellen Hintergrunds wiedergegeben und/oder verändert werden soll. Beispielsweise kann es vorgesehen sein, dass die Hintergrund-Wiedergabeeinrichtung zu einem zeitlichen Verändern der wiedergegebenen Darstellung des virtuellen Hintergrunds ausgebildet ist, so dass durch eine Übermittlung eines Zeitstempels bzw. einer Zeitinformation zusätzlich zu den jeweiligen an einem der mehreren Paneele wiederzugebenden Abschnitt erreicht werden kann, dass sämtliche Paneele den jeweiligen Abschnitt der Darstellung des virtuellen Hintergrunds zeitgleich aktualisieren. Darüber hinaus können über eine Ethernet-Verbindung auch Daten, etwa Statusinformationen oder Positionsinformationen des Paneels, von der zweiten Steuereinheit an die erste Steuereinheit übertragen werden, welche die erste Steuereinheit bei dem Generieren des virtuellen Hintergrunds und/oder dem Ermitteln der Projektion auf die aktive Beleuchtungseinrichtung der Hintergrund-Wiedergabeeinrichtung berücksichtigen kann.

Darüber hinaus ist Ethernet meist in standardisierte Systeme integriert, so dass beispielsweise die erste Steuereinheit auch in externe Rechenzentren verlagert werden kann, um entsprechende und beispielsweise in dem virtuellen Bildaufnahmestudio nicht ohne Weiteres zur Verfügung zu stellende Rechenkapazitäten nutzen zu können. Aufgrund der derzeitigen Möglichkeiten zur Signalübertragung kann eine solche externe Anordnung der ersten Steuereinheit bei einer Kommunikation über eine Ethernet-Verbindung ermöglicht werden, ohne dass die Steuerung der Hintergrund-Wiedergabeeinrichtung über ein akzeptables Maß hinaus verlangsamt wird. Zudem kann es, wie nachstehend noch näher erläutert ist, vorgesehen sein, einzelne Abschnitte der Darstellung des virtuellen Hintergrunds lediglich komprimiert von der ersten Steuereinheit zu der zumindest einen zweiten Steuereinheit zu übertragen, wodurch etwaige Latenzen noch weiter verringert werden können.

Die Hintergrund-Wiedergabeeinrichtung kann bei einigen Ausführungsformen eine Schnittstelle zum Empfangen einer Information über ein Abbildungsfenster der zugeordneten Kamera aufweisen, wobei die erste Steuereinheit dazu ausgebildet sein kann, den zumindest einen Abschnitt der ermittelten Projektion in Abhängigkeit von Informationen über das Abbildungsfenster der Kamera zu ermitteln und an die zumindest eine zweite Steuereinheit zu übermitteln.

Ein solches Abbildungsfenster der Kamera kann insbesondere auch als Frustum oder Sehpyramide der zugeordneten Kamera bezeichnet werden und insbesondere bestimmen, welcher Teil der Hintergrund-Wiedergabeeinrichtung und/oder der aktiven Beleuchtungseinrichtung von der Kamera, insbesondere zu einem bestimmten Moment und in Abhängigkeit von einer Ausrichtung und/oder Einstellung der Kamera, erfasst ist. Dazu kann die Information über das Abbildungsfenster der Kamera insbesondere dessen Position und/oder Größe im Bereich der Hintergrund-Wiedergabeeinrichtung umfassen.

Die erste Steuereinheit kann beispielsweise dazu ausgebildet sein, anhand der Information über das Abbildungsfenster der zugeordneten Kamera zu ermitteln, ob der zumindest eine Abschnitt der ermittelten Projektion von der Kamera abgebildet wird und in einer von der Kamera erzeugten Abbildung zu sehen ist. In diesem Fall kann die erste Steuereinheit dazu ausgebildet sein, den zumindest einen Abschnitt insbesondere mit einer möglichst hohen Auflösung an die zweite Steuereinheit zu übermitteln, um sicherzustellen, dass die Darstellung des virtuellen Hintergrunds von der Kamera bestmöglich abgebildet werden kann. Befindet sich der zumindest eine Abschnitt hingegen außerhalb des Abbildungsfensters der Kamera, kann es beispielsweise ausreichend sein, den Abschnitt mit lediglich verringerter Auflösung an der Hintergrund-Wiedergabeeinrichtung wiederzugeben, so dass die erste Steuereinheit den zumindest einen Abschnitt beispielsweise mit einer verringerten Auflösung und die entsprechenden Bilddaten dadurch komprimiert an die zweite Steuereinheit übermitteln kann. Auch dadurch kann die zu übermittelnde Datenmenge minimiert und die Steuerung der Hintergrund-Wiedergabeeinrichtung beschleunigt werden.

Die erste Steuereinheit kann bei einigen Ausführungsformen dazu ausgebildet sein, den zumindest einen Abschnitt der ermittelten Projektion an die zumindest eine zweite Steuereinheit zu übermitteln, wenn sich der zumindest eine Abschnitt in dem Abbildungsfenster der zugeordneten Kamera befindet. Ferner kann die erste Steuereinheit bei solchen Ausführungsformen dazu ausgebildet sein, den zumindest einen Abschnitt vor dem Übermitteln an die zumindest eine zweite Steuereinheit zu verändern oder den zumindest einen Abschnitt nicht an die zumindest eine zweite Steuereinheit zu übermitteln, wenn sich der zumindest eine Abschnitt nicht in dem Abbildungsfenster der zugeordneten Kamera befindet.

Insbesondere kann die erste Steuereinheit dazu ausgebildet sein, den zumindest einen Abschnitt in Abhängigkeit davon an die zumindest eine zweite Steuereinheit zu übermitteln, ob sich das zumindest eine Paneel in dem Abbildungsfenster der zugeordneten Kamera befindet oder nicht. Insbesondere, wenn die Hintergrund-Wiedergabeeinrichtung mehrere Paneele und mehrere einem jeweiligen Paneel zugeordnete zweite Steuereinheiten aufweist, kann ein jeweiliger Abschnitt der ermittelten Projektion selektiv an die jeweilige zweite Steuereinheit übermittelt werden, nämlich in Abhängigkeit davon, ob sich das jeweilige Paneel bzw. der entsprechende Abschnitt der ermittelten Projektion in dem Abbildungsfenster der zugeordneten Kamera befindet oder nicht. Dies wird nachstehend noch näher erläutert.

Es kann somit vorgesehen sein, den zumindest einen Abschnitt lediglich dann unverändert und insbesondere mit maximaler Auflösung an die zumindest eine zweite Steuereinheit zu übermitteln, wenn der zumindest eine Abschnitt auch von der zugeordneten Kamera abgebildet wird. Befindet sich der zumindest eine Abschnitt der Darstellung des virtuellen Hintergrunds und/oder ein jeweiliges Paneel, an welchem der Abschnitt wiedergegeben wird, hingegen nicht in dem Abbildungsfenster der zugeordneten Kamera, können die dem Abschnitt entsprechenden Bilddaten beispielsweise komprimiert und/oder mit verringerter Auflösung an die zweite Steuereinheit übermittelt werden, oder der Abschnitt kann nicht an die zweite Steuereinheit übermittelt werden. An der Hintergrund-Wiedergabeeinrichtung können somit insbesondere bei einigen Ausführungsformen lediglich die Bildpunktelemente der aktiven Beleuchtungseinrichtung und/oder diejenigen Paneele angesteuert werden, welche sich in dem Abbildungsfenster der Kamera befinden. Insbesondere ermöglicht dies eine Reduktion der zu übertragenden Datenmenge hinsichtlich der Übertragung der Bilddaten von der ersten Steuereinheit an die zweite Steuereinheit.

Ferner kann die erste Steuereinheit bei einigen Ausführungsformen dazu ausgebildet sein, einen Beleuchtungsbefehl an die zumindest eine zweite Steuereinheit zu übermitteln, wenn sich das zumindest eine Paneel nicht in dem Abbildungsfenster der zugeordneten Kamera befindet, wobei die zumindest eine zweite Steuereinheit dazu ausgebildet sein kann, die aktive Beleuchtungseinrichtung in Ansprechen auf den Beleuchtungsbefehl zum Beleuchten des realen Motivs anzusteuern.

Insbesondere kann die erste Steuereinheit dazu ausgebildet sein, bei einer mit mehreren Paneelen und mehreren einem jeweiligen Paneel zugeordneten zweiten Steuereinheiten ausgebildeten Hintergrund-Wiedergabeeinrichtung an wenigstens eine der mehreren zweiten Steuereinheiten einen derartigen Beleuchtungsbefehl zu übermitteln, wenn sich das jeweilige Paneel nicht in dem Abbildungsfenster der zugeordneten Kamera befindet. Entsprechend kann diejenige der mehreren zweiten Steuereinheiten, welche einen Beleuchtungsbefehl erhält, dazu ausgebildet sein, die Bildpunktelemente des jeweiligen Paneels zum Ausführen des Beleuchtungsbefehls anzusteuern.

Wie bereits erläutert, kann die Hintergrund-Wiedergabeeinrichtung zusätzlich zu der Wiedergabe der Darstellung des virtuellen Hintergrunds auch dazu ausgebildet sein, das reale Motiv zu beleuchten und/oder eine sonstige Beleuchtung des virtuellen Bildaufnahmestudios zu unterstützen. Durch die Übermittlung eines Beleuchtungsbefehls kann daher beispielsweise erreicht werden, dass sich außerhalb des Abbildungsfensters der Kamera befindliche Abschnitte der Darstellung des virtuellen Hintergrunds und/oder Paneele weiterhin dazu genutzt werden, das reale Motiv zu beleuchten, jedoch nicht die gesamten Bilddaten des jeweiligen zugeordneten Abschnitts der Darstellung des virtuellen Hintergrunds bzw. der Projektion übertragen werden müssen. Auch hierdurch kann die Steuerung der Hintergrund-Wiedergabeeinrichtung beschleunigt und die zu übertragende Datenmenge reduziert werden.

Bei einigen Ausführungsformen kann die erste Steuereinheit dazu ausgebildet sein, den zumindest einen Abschnitt komprimiert, insbesondere mit verringerter Auflösung, an die zumindest eine zweite Steuereinheit zu übermitteln, wenn sich das zumindest eine Paneel und/oder der zumindest eine Abschnitt nicht in dem Abbildungsfenster der zugeordneten Kamera befindet.

Insbesondere kann die erste Steuereinheit dazu ausgebildet sein, den zumindest einen Abschnitt mit verringerter räumlicher Auflösung an die zumindest eine zweite Steuereinheit zu übermitteln, wenn sich der zumindest eine Abschnitt nicht in dem Abbildungsfenster der zugeordneten Kamera befindet. Insofern kann die erste Steuereinheit beispielsweise auch dazu ausgebildet sein, anstelle eines konkreten Beleuchtungsbefehls den zumindest einen Abschnitt komprimiert an die zweite Steuereinheit zu übermitteln, wenn dieser Abschnitt in einer folgenden Abbildung der Darstellung des virtuellen Hintergrunds durch die Kamera nicht abgebildet wird und ausschließlich der Beleuchtung des realen Motivs dient.

Auch bei einer Wiedergabe des zumindest einen Abschnitts mit verringerter Auflösung kann an dem entsprechenden Paneel insbesondere Licht mit einer ähnlichen Helligkeit und/oder Farbverteilung wie bei einer Widergabe des Abschnitts mit maximaler Auflösung generiert werden, so dass sich die Beleuchtung des realen Motivs durch die lediglich komprimierte Übertragung des zumindest einen Abschnitts nicht merklich ändern muss. So kann beispielsweise eine zuvor in einer Abbildung der Kamera noch sichtbare Straßenbeleuchtung, die von dem virtuellen Hintergrund umfasst sein kann, in einer darauffolgenden Abbildung nicht mehr unmittelbar abgebildet sein, wobei die unscharfe, jedoch nicht vollkommen unterbundene Wiedergabe der Straßenbeleuchtung an dem sich nicht mehr in dem Abbildungsfenster der Kamera befindenden Paneel es ermöglichen kann, dass das reale Motiv auch in der folgenden Abbildung noch derart beleuchtet wird, wie es die Anordnung der zuvor abgebildeten Straßenlaternen erwarten ließe. Dies kann insbesondere bei Bewegtbildaufnahmen relevant sein. Durch eine solche, weniger hoch aufgelöste und/oder verschwommene Wiedergabe von Abschnitten der Darstellung des virtuellen Hintergrunds, die sich außerhalb eines Abbildungsfensters der Kamera befinden, kann daher eine realistische bzw. erwartete Beleuchtung des realen Motivs erreicht werden, wobei die Daten jedoch komprimiert von der ersten Steuereinheit an die zweite Steuereinheit übermittelt und die Steuerung der Hintergrund-Wiedergabeeinrichtung dadurch beschleunigt werden kann.

Insbesondere kann die erste Steuereinheit dazu ausgebildet sein, sich zeitlich veränderte virtuelle Hintergründe zu generieren und/oder sich zeitlich verändernde Projektionen des virtuellen Hintergrunds auf aktive Beleuchtungseinrichtung zu ermitteln und an die zweite Steuereinheit weiterzuleiten. Dies kann es beispielsweise ermöglichen, Bewegungen in dem virtuellen Hintergrund mittels der Hintergrund-Wiedergabeeinrichtung wiederzugeben. Ferner kann die erste Steuereinheit dazu ausgebildet sein, ein Abbildungsfenster der Kamera in Echtzeit bei der Übermittlung des zumindest einen Abschnitts an die zweite Steuereinheit zu berücksichtigen, so dass beispielsweise ein sich infolge eines Kameraschwenks örtlich veränderndes Abbildungsfenster in Echtzeit berücksichtigt werden kann, um einen sich in einer folgenden Abbildung nicht mehr in dem Abbildungsfenster der Kamera befindende Abschnitt nicht oder verändert an die zumindest eine zweite Steuereinheit zu übertragen.

Die erste Steuereinheit kann bei einigen Ausführungsformen mit einem Speicher verbunden sein, in welchem ein Modell des virtuellen Hintergrunds gespeichert ist. Die erste Steuereinheit kann dazu ausgebildet sein, den virtuellen Hintergrund anhand des Modells zu generieren.

Die erste Steuereinheit kann beispielsweise als ein 3D-Rechner ausgebildet sein und/oder ein entsprechendes Modul umfassen, um anhand eines Modells einen dreidimensionalen virtuellen Hintergrund generieren zu können. Beispielsweise kann die erste Steuereinheit dazu auf eine Game-Engine zurückgreifen, um - ähnlich wie bei einem Computerspiel in Abhängigkeit von einer Position des Spielers - in Abhängigkeit von einer Position der Kamera in dem virtuellen Bildaufnahmestudio einen jeweiligen virtuellen Hintergrund, insbesondere in drei Dimensionen, zu generieren. Dazu kann die erste Steuereinheit beispielsweise auf eine oder mehrere Datenbanken zugreifen, welche in dem Speicher gespeichert sein können und welche beispielsweise ein jeweiliges Modell des virtuellen Hintergrunds in Abhängigkeit von einer Position der Kamera enthalten können. Der Speicher kann beispielsweise als Halbleiterspeicher ausgebildet sein.

Ferner kann die erste Steuereinheit bei einigen Ausführungsformen eine Einleseeinrichtung aufweisen, welche dazu ausgebildet ist, den virtuellen Hintergrund oder einen Teil des virtuellen Hintergrunds als externe Datei einzulesen. Beispielsweise kann eine solche Einleseeinrichtung als ein DVD-Player ausgebildet sein, um eine auf einer DVD gespeicherte Bewegtbildsequenz einlesen und als virtuellen Hintergrund verwenden zu können. Die Einleseeinrichtung kann jedoch auch von sonstigen Anschlüssen gebildet sein, um externe Daten an die erste Steuereinheit übermitteln zu können, anhand derer die erste Steuereinheit den virtuellen Hintergrund generieren kann. In Betracht kommen hierzu insbesondere serielle Datenanschlüsse, beispielsweise USB-(Universal Serial Bus-)Anschlüsse.

Die zumindest eine zweite Steuereinheit kann bei einigen Ausführungsformen dazu ausgebildet sein, zumindest einen Teil der Vielzahl von Bildpunktelementen individuell und/oder in Gruppen benachbarter Bildpunktelemente anzusteuern.

Beispielsweise kann die zumindest eine Steuereinheit dazu ausgebildet sein, zumindest einen Teil der Vielzahl von Bildpunktelementen unmittelbar anzusteuern, um etwa eine Farbe und/oder eine Helligkeit des jeweiligen Bildpunktelements anzusteuern. Es kann jedoch auch vorgesehen sein, dass einer Gruppe von Bildpunktelementen eine jeweilige dritte Steuereinheit zugeordnet ist, welche von der zumindest einen zweiten Steuereinheit unmittelbar angesteuert werden kann, um in Abhängigkeit von von der zweiten Steuereinheit übermittelten Befehlen und/oder Informationen die jeweiligen zugeordneten Bildpunktelemente direkt anzusteuern. Die jeweilige dritte Steuereinheit kann von der ersten Steuereinheit und der oder den zweiten Steuereinheit(en) separat ausgebildet sein, d.h. als getrennte physische Einheit.

Bei einigen Ausführungsformen kann die Steuereinrichtung mehrere dritte Steuereinheiten umfassen und die Bildpunktelemente können in mehrere Gruppen von Bildpunktelementen eingeteilt sein, wobei jeder der mehreren Gruppen eine jeweilige dritte Steuereinheit zugeordnet sein kann. Die zumindest eine zweite Steuereinheit kann dazu ausgebildet sein, jedes Bildpunktelement einer Gruppe individuell oder die Gruppe von Bildpunktelementen mittels der jeweiligen zugeordneten dritten Steuereinheit anzusteuern.

Beispielsweise können die Bildpunktelemente von Leuchtdioden gebildet sein und die mehreren dritten Steuereinheiten können als LED-Treiber und/oder als Treiber-Chip ausgebildet sein. Ferner kann es vorgesehen sein, dass dem zumindest einen Paneel oder jedem von mehreren Paneelen, welche die Hintergrund-Wiedergabeeinrichtung umfasst, eine jeweilige zweite Steuereinheit zugeordnet ist, welche eine Paneel-Steuerung bilden kann. Die einem jeweiligen Paneel zugeordnete zweite Steuereinheit kann mit mehreren dritten Steuereinheiten kommunizieren, über welche die an dem Paneel angeordneten Bildpunktelemente ansteuerbar sein können. Insofern kann die erste Steuereinheit gewissermaßen einen zentralen Controller für die gesamte Hintergrund-Wiedergabeeinrichtung bilden, um den virtuellen Hintergrund zu generieren und auf die Hintergrund-Wiedergabeeinrichtung bzw. die aktive Beleuchtungseinrichtung zu projizieren, wobei die zumindest eine zweite Steuereinheit und/oder mehrere zweite Steuereinheiten dazu ausgebildet sein können, einen jeweiligen Bereich der Hintergrund-Wiedergabeeinrichtung und insbesondere ein jeweiliges Paneel der Hintergrund-Wiedergabeeinrichtung anzusteuern. Daher kann beispielsweise ein jeweiliger Abschnitt der Darstellung des virtuellen Hintergrunds und insbesondere ein jeweiliger Abschnitt der von der ersten Steuereinheit generierten Projektion an die jeweiligen zweiten Steuereinheiten übermittelt werden, wobei die zweiten Steuereinheiten daraufhin die zugeordneten dritten Steuereinheiten eines Paneels zum Wiedergeben des Abschnitts der Darstellung des virtuellen Hintergrunds ansteuern können.

Die aktive Beleuchtungseinrichtung kann bei einigen Ausführungsformen mehrere Paneele umfassen, wobei jedem der mehreren Paneele eine jeweilige zweite Steuereinheit zugeordnet sein kann. Die erste Steuereinheit kann dazu ausgebildet sein, an jede der mehreren zweiten Steuereinheiten einen jeweiligen Abschnitt der ermittelten Projektion zu übermitteln, und die mehreren zweiten Steuereinheiten können dazu ausgebildet sein, die Bildpunktelemente des zugeordneten Paneels zum Darstellen des jeweiligen Abschnitts der ermittelten Projektion des virtuellen Hintergrunds anzusteuern. Insbesondere kann die aktive Beleuchtungseinrichtung somit durch mehrere Paneele zusammengesetzt sein.

Die mehreren zweiten Steuereinheiten können bei einigen Ausführungsformen dazu ausgebildet sein, eine jeweilige Information über eine Geometrie und/oder Anordnung des zugeordneten Paneels an die erste Steuereinheit zu übermitteln, und die erste Steuereinheit kann dazu ausgebildet sein, den jeweiligen Abschnitt in Abhängigkeit von der Information anzupassen. Wie bereits erläutert, kann die erste Steuereinheit beispielsweise dazu ausgebildet sein, den jeweiligen Abschnitt in Abhängigkeit von Abmessungen des zugeordneten Paneels und/oder dessen Anordnung im Raum anzupassen, so dass insbesondere in der ermittelten Projektion des virtuellen Hintergrunds übereinanderliegende Abschnitte auch an zweite Steuereinheiten übereinander angeordneter Paneele übermittelt werden können. Die erste Steuereinheit kann durch eine solche Informationsübermittlung insbesondere flexibel mit verschieden ausgebildeten oder anpassbaren aktiven Beleuchtungseinrichtungen genutzt werden. Beispielsweise kann eine an die konkrete Ausbildung der aktiven Beleuchtungseinrichtung, insbesondere hinsichtlich einer Anzahl und einer Anordnung der Paneele, angepasste Aufteilung der ermittelten Projektion auf die mehreren Paneele erfolgen. Dazu können die mehreren zweiten Steuereinheiten ferner insbesondere über ein Netzwerk mit der ersten Steuereinheit verknüpft sein.

Ferner kann die erste Steuereinheit bei einigen Ausführungsformen dazu ausgebildet sein, die jeweiligen Abschnitte mit einem gemeinsamen Zeitstempel an die mehreren zweiten Steuereinheiten zu übermitteln, wobei die mehreren zweiten Steuereinheiten dazu ausgebildet sein können, die Bildpunktelemente der mehreren Paneele zum Darstellen der jeweiligen Abschnitte zu einem durch den Zeitstempel definierten Zeitpunkt anzusteuern.

Bei einer Darstellung des virtuellen Hintergrunds mittels mehrerer Paneele, denen eine jeweilige zweite Steuereinheit zugeordnet ist, kann an jede der mehreren zweiten Steuereinheiten ein jeweiliger Abschnitt der Projektion des virtuellen Hintergrunds von der ersten Steuereinheit übermittelt werden. Die erste Steuereinheit kann insofern die Projektion auf die verschiedenen Paneele verteilen, so dass die gesamte Darstellung des virtuellen Hintergrunds letztlich gemeinsam an den Paneelen wiedergegeben werden kann. Um zu erreichen, dass an der gesamten Hintergrund-Wiedergabeeinrichtung zu einem gemeinsamen Zeitpunkt die Darstellung wiedergegeben und/oder verändert wird, kann zudem gemeinsam mit den jeweiligen Bilddaten des jeweiligen Abschnitts der Projektion ein Zeitstempel übermittelt werden, um das Wiedergeben der jeweiligen Abschnitte der Darstellung an den mehreren Paneele synchronisieren zu können. Wie bereits erläutert, kann dazu insbesondere ein PTP (Precision Time Protocol) genutzt werden, wobei zum Übertragen sowohl der Bilddaten der Projektion von der ersten Steuereinheit an die mehreren zweiten Steuereinheiten als auch eines solchen Zeitstempels insbesondere die bereits genannte Ethernet-Verbindung zwischen der ersten Steuereinheit und den mehreren zweiten Steuereinheiten vorgesehen sein kann. Ferner können die mehreren zweiten Steuereinheiten über ein Netzwerk mit der ersten Steuereinheit verknüpft sein, um das Ausführen eines solchen Protokolls zu ermöglichen.

Bei einigen Ausführungsformen können die mehreren zweiten Steuereinheiten dazu ausgebildet sein, Kalibrierdaten des jeweiligen zugeordneten Paneels an die erste Steuereinheit zu übertragen, wobei die erste Steuereinheit dazu ausgebildet sein kann, die Projektion des virtuellen Hintergrunds in Abhängigkeit von den empfangenen Kalibrierdaten zu ermitteln. Auch derartige Kalibrierdaten können beispielsweise über eine Ethernet-Verbindung übertragbar sein.

Beispielsweise kann es sich bei den Kalibrierdaten um Kennlinien optoelektronischer Übertragungsfunktionen (OECR-Kennlinien, optoelectronic conversion function), etwaige Betrachtungswinkelabhängigkeiten hinsichtlich der Darstellung des virtuellen Hintergrunds, Emissionsspektren der Bildpunktelemente des jeweiligen mittels der zweiten Steuereinheit gesteuerten Paneels, ein Layout und/oder eine Anordnung der Bildpunktelemente des jeweiligen Paneels oder ein Raster der Bildpunktelemente handeln. Ferner kann mittels der Kalibrierdaten eine jeweilige Neigung des Paneels und/oder eine Position des Paneels an die erste Steuereinheit übermittelbar sein. Insbesondere kann die erste Steuereinheit dazu ausgebildet sein, derartige Ausrichtungen der jeweiligen Paneele im Raum bei der Projektion des virtuellen Hintergrunds auf die aktive Beleuchtungseinrichtung zu berücksichtigen.

Bei einigen Ausführungsformen kann jedes der mehreren Paneele rechteckig und randlos ausgebildet sein, wobei die mehreren Paneele in einer zweidimensionalen Matrix angeordnet sein können. Insbesondere können die mehreren Paneele quadratisch ausgebildet sein. Durch eine randlose Ausbildung der mehreren Paneele kann insbesondere erreicht werden, dass die Darstellung des virtuellen Hintergrunds auch an einem Übergang zwischen verschiedenen Paneelen durchgängig dargestellt werden kann.

Die Erfindung betrifft ferner ein Aufnahmesystem für ein virtuelles Bildaufnahmestudio, umfassend eine Kamera und eine Hintergrund-Wiedergabeeinrichtung, insbesondere wie hierin offenbart, wobei die Hintergrund-Wiedergabeeinrichtung dazu ausgebildet ist, hinter einem realen Motiv eine Darstellung eines virtuellen Hintergrunds für eine Aufnahme mittels der Kamera wiederzugeben. Die Hintergrund-Wiedergabeeinrichtung weist eine aktive Beleuchtungseinrichtung auf, welche mehrere Paneele mit einer Vielzahl von Bildpunktelementen umfasst, und die Kamera ist dazu ausgebildet, eine Information über ein Abbildungsfenster an eine Schnittstelle der Hintergrund-Wiedergabeeinrichtung zu übermitteln. Die Hintergrund-Wiedergabeeinrichtung ist ferner dazu ausgebildet, die Paneele in Abhängigkeit von der übermittelten Information über das Abbildungsfenster selektiv zum Wiedergeben der Darstellung des virtuellen Hintergrunds anzusteuern.

Die Erfindung betrifft ferner eine Hintergrund-Wiedergabeeinrichtung für ein virtuelles Bildaufnahmestudio, die dazu ausgebildet ist, hinter einem realen Motiv eine Darstellung eines virtuellen Hintergrunds für eine Aufnahme mittels einer zugeordneten Kamera wiederzugeben. Die Hintergrund-Wiedergabeeinrichtung weist eine aktive Beleuchtungseinrichtung auf, welche mehrere Paneele mit einer Vielzahl von Bildpunktelementen umfasst. Die Hintergrund-Wiedergabeeinrichtung weist eine Schnittstelle zum Empfangen einer Information über ein Abbildungsfenster der zugeordneten Kamera auf. Die Hintergrund-Wiedergabeeinrichtung ist ferner dazu ausgebildet, die Paneele in Abhängigkeit von der empfangenen Information über das Abbildungsfenster selektiv zum Wiedergeben der Darstellung des virtuellen Hintergrunds anzusteuern.

Bei diesen beiden Erfindungsaspekten ist die erläuterte Unterteilung in eine einzige erste Steuereinheit und zumindest eine zweite Steuereinheit nicht zwingend erforderlich. Die Hintergrund-Wiedergabeeinrichtung kann jedoch beispielsweise als eine LED-Wand ausgebildet sein, die eine Vielzahl von Leuchtdioden aufweist, welche die Bildpunktelemente bilden.

Bei diesen beiden Erfindungsaspekten kann die Hintergrund-Wiedergabeeinrichtung, wie vorstehend bereits erläutert, insbesondere dazu ausgebildet sein, jeweilige Bereiche der aktiven Beleuchtungseinrichtung, welche sich nicht in dem Abbildungsfenster der Kamera befinden, lediglich zu einem Wiedergeben der Darstellung des virtuellen Hintergrunds mit verringerter räumlicher Auflösung und/oder lediglich zu einem Beleuchten des realen Motivs anzusteuern und/oder in einen inaktiven Zustand zu versetzen. Insbesondere können somit die an die Hintergrund-Wiedergabeeinrichtung zu übermittelnden Datenmengen auf diejenigen Daten begrenzt werden, die von der zugeordneten Kamera auch tatsächlich abgebildet und/oder zum Beleuchten des realen Motivs benötigt werden. Die Anpassung der Darstellung des virtuellen Hintergrunds bzw. die Ansteuerung der Bildpunktelemente kann ferner insbesondere in Echtzeit erfolgen, so dass beispielsweise die Ansteuerung der Bildpunktelemente in Abhängigkeit von einer Kamerabewegung variieren kann. Die Hintergrund-Wiedergabeeinrichtung kann bei einigen Ausführungsformen ferner dazu ausgebildet sein, die Darstellung des virtuellen Hintergrunds an sich außerhalb des Abbildungsfensters der Kamera befindenden Paneele nicht oder mit verringerter Auflösung wiederzugeben.

Ferner betrifft die Erfindung ein Verfahren zum Wiedergeben einer Darstellung eines virtuellen Hintergrunds mittels einer Hintergrund-Wiedergabeeinrichtung, insbesondere einer Hintergrund-Wiedergabeeinrichtung wie hierin offenbart, für eine Aufnahme mit einer Kamera in einem virtuellen Bildaufnahmestudio. Die Hintergrund-Wiedergabeeinrichtung weist eine aktive Beleuchtungseinrichtung auf, welche zumindest ein Paneel mit einer Vielzahl von Bildpunktelementen umfasst. Bei diesem Verfahren wird mittels einer einzigen ersten Steuereinheit der virtuelle Hintergrund generiert, eine Projektion des virtuellen Hintergrunds auf die aktive Beleuchtungseinrichtung ermittelt und zumindest ein Abschnitt der ermittelten Projektion an zumindest eine zweite Steuereinheit übermittelt. Ferner wird die aktive Beleuchtungseinrichtung mittels der zumindest einen zweiten Steuereinheit zum Darstellen des zumindest einen Abschnitts der ermittelten Projektion des virtuellen Hintergrunds angesteuert.

Wie bereits erläutert, kann bei einem solchen Verfahren eine einzige erste Steuereinheit dazu genutzt werden, sowohl den virtuellen Hintergrund zu generieren, insbesondere einen dreidimensionalen virtuellen Hintergrund, als auch auf die aktive Beleuchtungseinrichtung und/oder zumindest ein Paneel der aktiven Beleuchtungseinrichtung zu projizieren. Insbesondere muss somit nicht ein zunächst generierter virtueller Hintergrund von einem 3D-Rechner an eine zentrale Steuerung der Hintergrund-Wiedergabeeinrichtung übertragen werden, woraufhin die zentrale Steuerung den empfangenen virtuellen Hintergrund bzw. die entsprechenden Daten zunächst verarbeiten muss, um eine Projektion erstellen zu können. Vielmehr können bei diesem Verfahren sämtliche Schritte vom Generieren des virtuellen Hintergrunds bis zum Übermitteln von Bilddaten, welche die Darstellung des virtuellen Hintergrunds an der Hintergrund-Wiedergabeeinrichtung repräsentieren, von der ersten Steuereinheit durchgeführt werden.

Die Erfindung wird im Folgenden rein beispielhaft anhand von Ausführungsbeispielen in Bezug auf die Zeichnungen erläutert.

Es zeigen:
- Fig. 1: eine schematische Darstellung eines Aufnahmesystems für ein Bildaufnahmestudio mit einer Hintergrund-Wiedergabeeinrichtung zur Wiedergabe einer Darstellung eines virtuellen Hintergrunds und mit einer Kamera,
- Fig. 2: eine schematische Darstellung einer für eine Aufnahme in dem Bildaufnahmestudio vorgesehenen Kamera,
- Fig. 3: eine schematische Veranschaulichung einer herkömmlichen Steuereinrichtung einer Hintergrund-Wiedergabeeinrichtung,
- Fig. 4: eine weitere schematische Veranschaulichung einer Steuereinrichtung einer Hintergrund-Wiedergabeeinrichtung, und
- Fig. 5A bis 5C: eine jeweilige schematische Darstellung des Aufnahmesystems zur Veranschaulichung einer Berücksichtigung eines Abbildungsfensters der Kamera bei der Steuerung der Hintergrund-Wiedergabeeinrichtung.

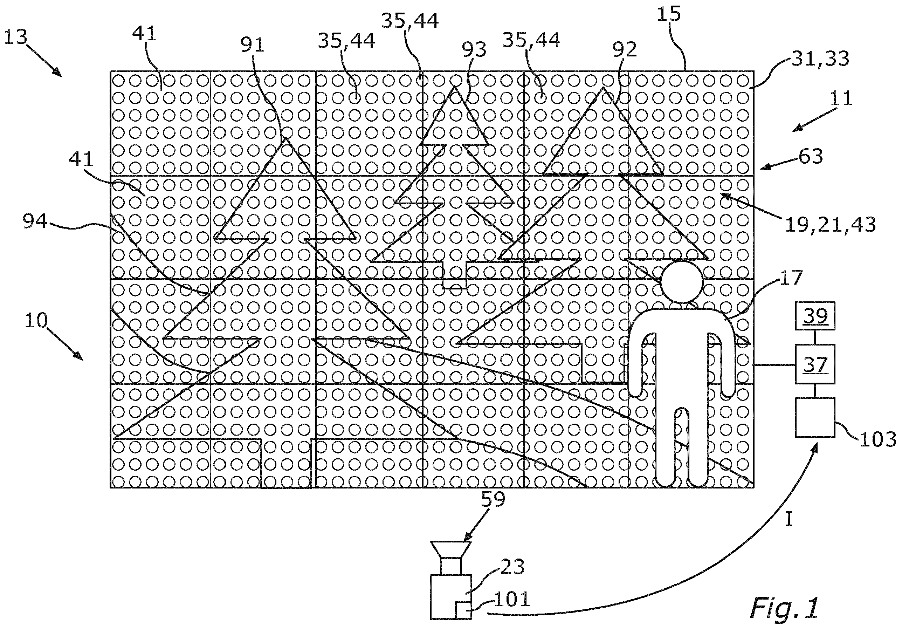

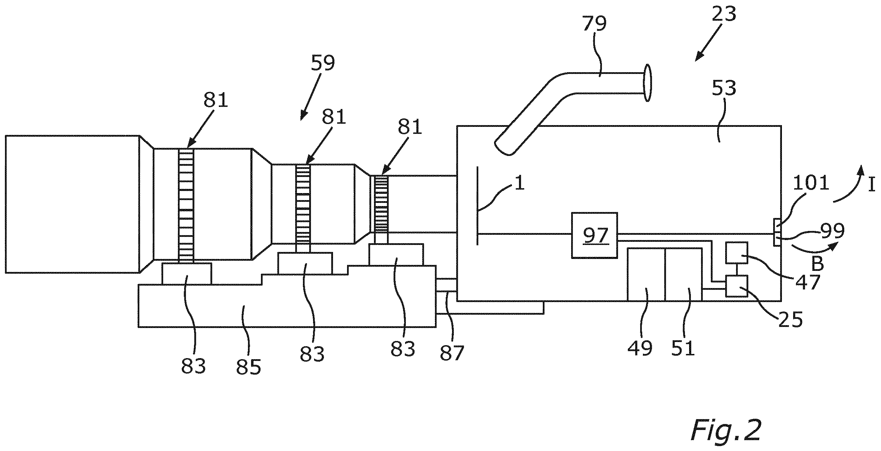

Fig. 1 zeigt schematisch ein virtuelles Bildaufnahmestudio 13, in welchen eine Szene, insbesondere in Form einer Bewegtbildaufnahme und/oder einer Fotoaufnahme, mittels einer zugeordneten Kamera 23 aufgenommen werden kann. Die Kamera 23 kann beispielsweise als Bewegtbildkamera ausgebildet sein, um Bewegtbildaufnahmen durchführen zu können, die als eine Folge von durch die Kamera 23 erzeugten Abbildungen gespeichert werden können. Dazu weist die Kamera 23 ein Objektiv 59 auf, welches insbesondere als Wechselobjektiv ausgebildet sein kann, das wahlweise mit einem Gehäuse der Kamera 23 verbunden werden kann. Dadurch kann stets ein jeweiliges optimal an die Umgebung in dem Bildaufnahmestudio 13 angepasstes Objektiv 59 genutzt werden, um bestmögliche Aufnahmen erstellen zu können. In dem Gehäuse der Kamera 23 kann insbesondere ein Bildsensor mit mehreren lichtempfindlichen Sensorelementen angeordnet sein, auf welche durch eine Blendenöffnung einer Blende eindringendes Licht mittels eines Linsensystems bzw. zumindest einer Linse zum Erzeugen einer Abbildung geleitet werden kann (vgl. Fig. 2).

Ferner ist in dem Bildaufnahmestudio 13 ein Hintergrundwiedergabesystem 11 mit einer Hintergrund-Wiedergabeeinrichtung 15 angeordnet, welches gemeinsam mit der Kamera 23 ein Aufnahmesystem 10 bildet. Die Hintergrund-Wiedergabeeinrichtung 15 umfasst eine als LED-Wand 33 ausgebildete aktive Beleuchtungseinrichtung 31 und ist dazu ausgebildet, eine Darstellung 19 eines virtuellen Hintergrunds 21 für eine Aufnahme mittels der Kamera 23 wiederzugeben. Dazu weist die Beleuchtungseinrichtung 31 bzw. die LED-Wand 33 eine Vielzahl von aktiv leuchtenden Bildpunktelementen 35 auf, die in einer zweidimensionalen Anordnung nebeneinander angeordnet sind. Beispielsweise können die Bildpunktelemente 35 als individuell ansteuerbare Leuchtdioden 44 oder als individuell ansteuerbare Leuchtdiodeneinheiten ausgebildet sein, wobei jede einer solchen Leuchtdiodeneinheit mehrere, insbesondere drei, Leuchtdioden 44 umfassen kann. Insbesondere kann es vorgesehen sein, dass die Bildpunktelemente 35 als Leuchtdiodeneinheiten mit drei jeweiligen Leuchtdioden 44 ausgebildet sind, wobei eine der drei Leuchtdioden 44 rotes Licht, eine Leuchtdiode 44 grünes Licht und ein Leuchtdiode 44 blaues Licht emittieren kann. Die Leuchtdiodeneinheit kann zudem einen Farbmischer umfassen, um durch jeweiliges individuelles Ansteuern der Leuchtdioden 44 einer Leuchtdiodeneinheit eine jeweilige von dem Bildpunktelement 35 emittierte Farbe und/oder Helligkeit einstellen zu können. Die Leuchtdioden 44 können beispielsweise als LED oder als organische Leuchtdioden 44 bzw. OLED ausgebildet sein. Grundsätzlich können auch Hintergrund-Wiedergabeeinrichtungen zur Wiedergabe einer Darstellung eines virtuellen Hintergrunds in dem Bildaufnahmestudio 13 zum Einsatz kommen, welche die Darstellung mittels einer Rückprojektion erzeugen.

Ferner umfasst die Hintergrund-Wiedergabeeinrichtung 15 eine Vielzahl von Paneelen 41, welche auch als Panels bezeichnet werden können. An jedem Paneel 41 der Vielzahl von Paneelen 41 ist eine jeweilige Vielzahl der aktiv leuchtenden Bildpunktelemente 35 angeordnet, so dass an jedem der Paneele 41 ein Abschnitt der Darstellung 19 des virtuellen Hintergrunds 21 wiedergegeben werden kann. Die Paneele 41 sind insbesondere rechteckig und/oder quadratisch sowie randlos ausgebildet, so dass die Darstellung 19 des virtuellen Hintergrunds 21 auch an den Übergängen zwischen Paneelen 41 ohne sichtbare Unterbrechungen wiedergegeben werden kann. Die Paneele 41 sind ferner in einer zweidimensionalen Matrix angeordnet, um die Hintergrund-Wiedergabeeinrichtung 15 zu bilden. Insofern umfasst die aktive Beleuchtungseinrichtung 31 bei der gezeigten Ausführungsform mehrere Paneele 41.

Die Darstellung 19 des virtuellen Hintergrunds 21 spiegelt hier beispielhaft eine dreidimensionale Szene 43 mit Objekten 91, 92, 93 und 94, drei Bäumen und einem Weg, wider, die durch geeignetes Ansteuern der Bildpunktelement 35, insbesondere geeignetes Einstellen deren jeweiliger Farbe und Helligkeit, erzeugt werden kann. Die dreidimensionale Szene 43 ist dabei auf die im Wesentlichen zweidimensionale Anordnung der Bildpunktelemente 35 der Beleuchtungseinrichtung 31 projiziert, wobei insbesondere die Objekte 91, 92 und 93 in einem unterschiedlichen Abstand zu der Beleuchtungseinrichtung 31 bzw. der Hintergrund-Wiedergabeeinrichtung 11 erscheinen, um die Dreidimensionalität eines dem virtuellen Hintergrund 21 entsprechenden realen Hintergrunds nachzubilden.

Insbesondere dient die Darstellung 19 des virtuellen Hintergrunds 21 mittels der Hintergrund-Wiedergabeeinrichtung 15 dazu, einen Hintergrund für eine Aufnahme eines realen Motivs 17, beispielsweise eines Schauspielers, zu erzeugen, vor welchem eine Aufnahme erfolgen bzw. eine Filmszene gespielt werden kann. Dadurch können in dem Bildaufnahmestudio 13 grundsätzlich beliebige Landschaften, Räume oder Umgebungen geschaffen werden, vor bzw. in welchen eine Szene beispielsweise für einen Kinofilm gedreht werden soll. Zudem ist es möglich, durch eine sich zeitlich verändernde Ansteuerung der Bildpunktelemente 35 Bewegungen in dem virtuellem Hintergrund 21, zum Beispiel ein vorbeifahrendes Auto, darzustellen, auf welche der Schauspieler 17 im Vergleich zu einem Schauspiel vor einem Green-Screen vereinfacht und verbessert reagieren kann.

Die Hintergrund-Wiedergabeeinrichtung 15 erstreckt sich hier im Wesentlichen in der Vertikalen, so dass sich der Schauspieler 17 vor dem virtuellen Hintergrund 21 bewegen kann. Um den virtuellen Hintergrund 21 jedoch umfänglicher darstellen zu können, kann sich die Hintergrund-Wiedergabeeinrichtung 15 auch um den Schauspieler 17 herum oder oberhalb von diesem erstrecken, wobei die Hintergrund-Wiedergabeeinrichtung 15 über dem Schauspieler 17 insbesondere eine horizontale Ausrichtung aufweisen kann. Um den Schauspieler 17 umgeben oder einen Übergang von der gezeigten vertikalen Ausrichtung zu einer horizontalen Ausrichtung erzeugen zu können, kann die Hintergrund-Wiedergabeeinrichtung 15 bzw. die Beleuchtungseinrichtung 31 oder die LED-Wand 33 zumindest abschnittsweise auch gewölbt bzw. gekrümmt sein.

Zusätzlich zu dem Darstellen des virtuellen Hintergrunds 21 kann die Hintergrund-Wiedergabeeinrichtung 15 auch dazu dienen, das reale Motiv 17 zu beleuchten und dadurch beispielsweise eine weitere Studiobeleuchtung des Bildaufnahmestudios 13 unterstützen. Ferner kann durch ein Beleuchten des realen Motivs 17 mittels der Hintergrund-Wiedergabeeinrichtung 15 die Wechselwirkung des realen Motivs 17 bzw. des Schauspielers 17 mit in dem virtuellen Hintergrund 21 vorhandenen Lichtquellen, beispielsweise Laternen oder Lampen, verbessert werden, indem das reale Motiv 17 einen Schatten wirft, der mit den in einer von der Kamera 23 erzeugten Abbildung sichtbaren Lichtverhältnissen korrespondiert.

Um die Darstellung 19 des virtuellen Hintergrunds 21 erzeugen und die Bildpunktelemente 35 zur Wiedergabe der Darstellung ansteuern zu können, weist die Hintergrund-Wiedergabeeinrichtung 15 eine Steuereinrichtung 37 auf, welche mit einem Speicher 39 verbunden ist. In dem Speicher 39 kann insbesondere ein Modell des virtuellen Hintergrunds 21 gespeichert sein, so dass die Steuereinrichtung den virtuellen Hintergrund 21 anhand des Modells generieren kann. Ferner kann die Steuereinrichtung 37 dazu ausgebildet sein, den virtuellen Hintergrund 21 auf die Hintergrund-Wiedergabeeinrichtung 15 und insbesondere die zweidimensionale Anordnung der Bildpunktelemente 35 zu projizieren.

Eine mögliche Ausführung der zugeordneten Kamera ist in Fig. 2 schematisch gezeigt. Die Kamera 23 weist einen Kamerakörper 53 auf, an welchem ein Objektiv 59 befestigt ist. Das Objektiv 59 kann dabei insbesondere als Wechselobjektiv ausgebildet sein, so dass wahlweise verschiedenartig ausgebildete Objektive 59 mit dem Kamerakörper 53 verbunden werden können und stets ein für eine jeweilige Aufnahme optimales Objektiv 59 gewählt werden kann. Das Objektiv 59 weist drei Objektivringe 81 auf, mittels derer jeweilige Parameter des Objektivs 59 eingestellt werden können. Beispielsweise können eine Fokusentfernung, eine Brennweite, ein Zoom-Faktor und/oder eine Blendenöffnung, insbesondere eine Öffnung einer Irisblende, durch Drehen eines jeweiligen der Objektivringe 81 einstellbar bzw. anpassbar sein. Die Kamera 23 kann insbesondere als Laufbildkamera oder Bewegtbildkamera ausgebildet sein, um aufeinanderfolgend eine Sequenz von Abbildungen 73 erzeugen zu können, die beispielsweise als ein Film abgespielt werden kann.

Um die Objektivringe 81 einstellen zu können, ist eine Objektivring-Antriebseinheit 85 über eine Haltestange 87 mit dem Kamerakörper 53 verbunden, welche für jeden der Objektivringe 81 einen jeweiligen Objektiv-Stellmotor 83 aufweist. Mittels dieser Objektiv-Stellmotoren 83 können die Objektivringe 81 gedreht und dadurch Einstellungen an dem Objektiv 59 vorgenommen werden. Insbesondere kann die Objektivring-Antriebseinheit 85 ferngesteuert betätigbar sein, so dass die genannten Objektivparameter ferngesteuert eingestellt bzw. verändert werden können.

An dem Kamerakörper 53 ist eine ferner Wiedergabeeinrichtung 49 angeordnet, über welche einem Benutzer Informationen zu Einstellungen der Kamera 23 angezeigt werden können. Bei der Wiedergabeeinrichtung 49 kann es sich insbesondere um ein Display handeln. Zudem weist die Kamera 23 eine an dem Kamerakörper 53 angeordnete Eingabeeinrichtung 51 auf, über welche der Benutzer Einstellungen der Kamera 23 vornehmen kann. Insbesondere kann an der Eingabeeinrichtung 51 eine Belichtungszeit der Kamera 23 einstellbar sein, wobei eine mit der Eingabeeinrichtung 51 verbundene Steuereinrichtung 25 dazu ausgebildet sein kann, die Kamera 23 gemäß der eingegebenen Belichtungszeit zu steuern. Insbesondere können die Wiedergabeeinrichtung 49 und die Eingabeeinrichtung 51 von einem Touchscreen gebildet sein, über welchen dem Benutzer sowohl Informationen angezeigt als auch Benutzereingaben empfangen werden können.

Um durch das Objektiv 59 eintreffendes Licht abbilden zu erzeugen, weist die Kamera 23 ferner einen innerhalb des Kamerakörpers 53 angeordneten Bildsensor 1 auf. Dieser Bildsensor 1 kann beispielsweise auf der CMOS-Technologie oder der CCD-Technologie basierend ausgebildet sein und eine Vielzahl von lichtempfindlichen Sensorelementen aufweisen, die in mehreren Zeilen und Spalten angeordnet sein können. Ferner weist die Kamera 23 eine Ausleseschaltung 97 auf, welche dazu ausgebildet ist, die Signale der jeweiligen Sensorelemente auszulesen, aufzubereiten, zu digitalisieren und an bzw. über einen Signalausgang 99 auszugeben. Dazu kann die Ausleseschaltung 97 insbesondere Verstärker, Multiplexer, Analog-DigitalWandler, Pufferspeicher und/oder Mikrocontroller umfassen. Letztlich kann somit von der Kamera 23 ein Bilddatensatz B erzeugt werden, welcher der Abbildung bzw. einer Abbildung eines Gesichtsfelds der Kamera 23 entspricht, und der Bilddatensatz B kann über den Signalausgang 99 ausgegeben werden. Um das Gesichtsfeld der Kamera 23 überprüfen und die Kamera 23 auf einen jeweiligen Bildausschnitt ausrichten zu können, ist an dem Kamerakörper 53 ferner ein Sucher 79 angeordnet, durch welchen ein Kameramann hindurchsehen kann. Zudem ist die Steuereinrichtung 25 mit einem Speicher 47 verbunden und kann beispielsweise dazu ausgebildet sein, den Bilddatensatz B wahlweise in den Speicher 47 einzuschreiben oder über den Signalausgang 99 auszugeben.

Ferner weisen die Hintergrund-Wiedergabeeinrichtung 15 eine Schnittstelle 103 und die Kamera 23 eine Schnittstelle 101 auf, über welche insbesondere Informationen I von der Kamera 23 an die Hintergrund-Wiedergabeeinrichtung 15 übermittelbar sein können. Insbesondere kann die Steuereinrichtung 37 der Hintergrund-Wiedergabeeinrichtung 15 dazu ausgebildet sein, die aktive Beleuchtungseinrichtung 31 in Abhängigkeit von einer von der Kamera 23 empfangenen Information I zu steuern, wie nachstehend noch näher erläutert ist.

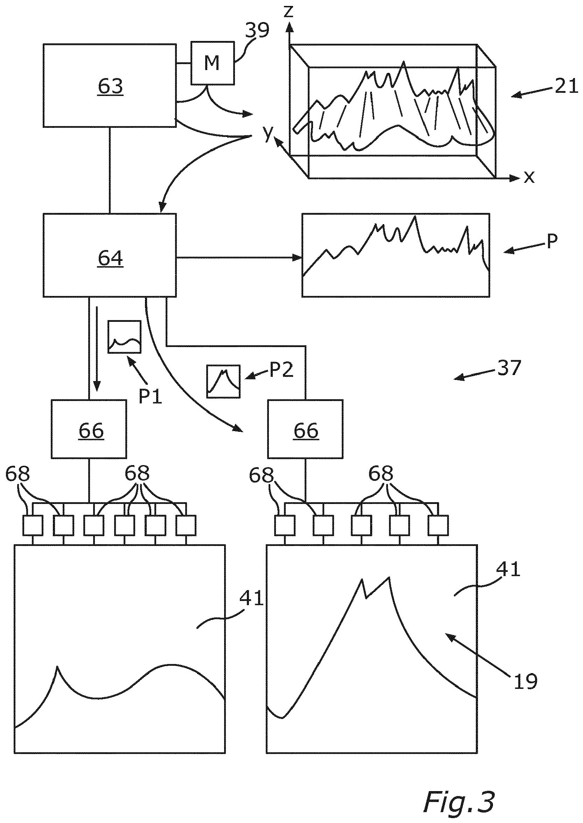

Fig. 3 zeigt eine schematische Veranschaulichung einer herkömmlichen Steuereinrichtung 37 einer solchen Hintergrund-Wiedergabeeinrichtung 15. Bei einer solchen Steuereinrichtung 37 ist zumeist ein 3D-Rechner 63 vorgesehen, welcher mit dem Speicher 39 verbunden ist. In dem Speicher 39 kann beispielsweise ein Modell M des virtuellen Hintergrunds 21 gespeichert und der 3D-Rechner kann dazu ausgebildet sein, anhand des Modells M den virtuellen Hintergrund 21 zu generieren. Beispielsweise ist der in Fig. 3 gezeigte virtuelle Hintergrund 21 von einer dreidimensionalen Gebirgslandschaft gebildet, so dass der 3D-Rechner 63 einen in einem dreidimensionalen Koordinatensystem x, y und z definierten virtuellen Hintergrund 21 generieren kann.

Daraufhin ist es bei der anhand von Fig. 3 veranschaulichten Steuereinrichtung 37 vorgesehen, dass der 3D-Rechner 63 den generierten virtuellen Hintergrund 21 an eine zentrale Steuerung 64 der Hintergrund-Wiedergabeeinrichtung 15 übermittelt. Die zentrale Steuerung 64 kann insbesondere dazu ausgebildet sein, den virtuellen Hintergrund 21 bzw. diesen repräsentierende Daten von dem 3D-Rechner 63 zu empfangen, die Daten auszulesen und zu prozessieren, um anhand des empfangenen virtuellen Hintergrunds 21 eine Projektion P des virtuellen Hintergrunds 21 auf die aktive Beleuchtungseinrichtung 31 zu ermitteln. Insbesondere kann die zentrale Steuerung 64 somit Bilddaten ermitteln, welche die Projektion P des virtuellen Hintergrunds 21 auf die aktive Beleuchtungseinrichtung 31 repräsentieren.

Wie bereits erläutert, kann die Hintergrund-Wiedergabeeinrichtung 15 insbesondere eine Vielzahl von Paneelen 41 umfassen, an welchen eine jeweilige Vielzahl von Bildpunktelementen 35, die insbesondere als Leuchtdioden 44 ausgebildet sein können, in einer zweidimensionalen Anordnung angeordnet sind. Die anhand von Fig. 3 veranschaulichte Steuereinrichtung 37 umfasst für jedes dieser Paneele 41 eine jeweilige Paneel-Steuerung 66, welche auch als Panel-Controller bezeichnet werden kann. Die zentrale Steuerung 64 der Hintergrund-Wiedergabeeinrichtung 15 kann dazu ausgebildet sein, jeweilige, an einzelnen Paneelen 41 darzustellende Abschnitte P1 und P2 der Projektion P des virtuellen Hintergrunds 21 zu bestimmen und an die jeweiligen Paneel-Steuerungen 66 der Paneele 41 zu übermitteln. Die Paneel-Steuerungen 66 können wiederum mit jeweiligen Bildpunktelementtreibern 68 verbunden sein, wobei jeder der Bildpunktelementtreiber 68 dazu ausgebildet sein kann, ein jeweiliges Bildpunktelement 35 oder eine Gruppe von Bildpunktelementen 35 des zugeordneten Paneels 41 anzusteuern. Über die Bildpunktelementtreiber 68 können an die Bildpunktelemente 35 beispielsweise jeweilige Bildinformationen, beispielsweise eine Helligkeit und/oder eine Farbe, eines mittels eines jeweiligen Bildpunktelements 35 wiederzugebenden Bildpunktes der Projektion P übermittelt werden, um die Bildpunktelemente 35 eines Paneels zum Wiedergeben des jeweiligen Abschnitts P1 oder P2 der Projektion P ansteuern zu können. Durch die Zusammenfügung der einzelnen Paneele 41 kann dadurch schließlich die gesamte Darstellung 19 des virtuellen Hintergrunds 21 an der Hintergrund-Wiedergabeeinrichtung 15 wiedergegeben werden.

Die Steuerung einer Hintergrund-Wiedergabeeinrichtung 15 mittels einer derartigen Steuereinrichtung 37 kann sich jedoch unerwünscht kompliziert gestalten, indem beispielsweise der von dem 3D-Rechner 63 generierte virtuelle Hintergrund 21 zunächst zu einem Datensatz zusammengefügt werden und an die zentrale Steuerung 64 übermittelt werden muss, welche sodann die empfangenen Daten beispielsweise erst dekodieren muss, um die Projektion P ermitteln zu können. Zudem arbeitet der 3D-Rechner 63 grundsätzlich losgelöst von den weiteren Komponenten der Steuereinrichtung 37, was eine insgesamt unübersichtliche Datenübertragung ausgehend von der Generierung des virtuellen Hintergrunds 21 bis zu der Wiedergabe der Darstellung 19 des virtuellen Hintergrunds 21 an der Hintergrund-Wiedergabeeinrichtung 15 zur Folge haben kann. Etwaige Fehler in der Darstellung 19 des virtuellen Hintergrunds 21 können daher schwer nachzuvollziehen und entsprechend schwer zu beheben sein.

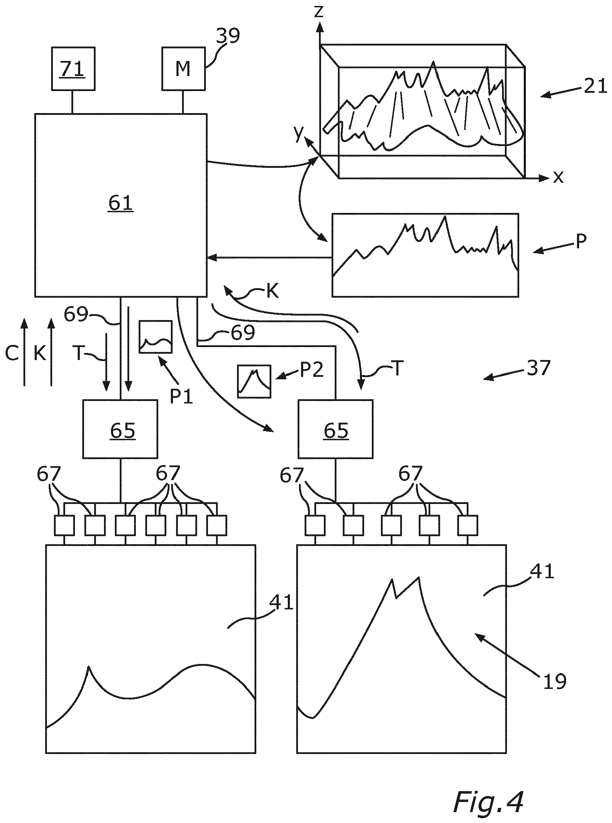

Um diesen Problemen zu begegnen, kann eine anhand von Fig. 4 veranschaulichte Steuereinrichtung 37 für eine Hintergrund-Wiedergabeeinrichtung 15 vorgesehen sein. Diese Steuereinrichtung 37 weist eine einzige erste Steuereinheit 61 auf, welche mit dem Speicher 39 verbunden ist. Ferner ist die erste Steuereinheit 61 dazu ausgebildet sowohl insbesondere anhand des Modells M den virtuellen Hintergrund 21 zu generieren als auch die Projektion P des virtuellen Hintergrunds 21 auf die aktive Beleuchtungseinrichtung 31 der Hintergrund-Wiedergabeeinrichtung 15 zu ermitteln. Darüber hinaus ist die erste Steuereinheit 61 dazu ausgebildet, die Abschnitte P1 und P2 an jeweilige zweite Steuereinheiten 65 zu übermitteln, welche den Paneelen 41 zugeordnet sind, an welchen die Abschnitte P1 und P2 der Projektion P des virtuellen Hintergrunds 21 auf die aktive Beleuchtungseinrichtung 31 wiedergegeben werden sollen. Insofern können die zweiten Steuereinheiten 65 insbesondere Paneel-Steuerungen bzw. Panel Controller darstellen, die jedoch auch dazu ausgebildet sind, die Funktion des 3D-Rechners 63 zum Generieren des virtuellen Hintergrunds 21 auszuführen.

Indem die Steuereinrichtung 37 eine einzige erste Steuereinheit 61 aufweist, kann die erste Steuereinheit 61 insbesondere eine einzige geschlossene Baueinheit bilden. Die erste Steuereinheit 61 kann grundsätzlich von einer einzigen Hardwarekomponente und/oder von in einem einzigen gemeinsamen Gehäuse eingehausten mehreren Hardwarekomponenten gebildet sein. Beispielsweise kann die erste Steuereinheit einen oder mehrere Mikrocontroller und/oder einen oder mehrere CPUs (Central Processing Unit) umfassen, wobei diese Mikrocontroller und/oder CPUs jedoch von einem gemeinsamen Gehäuse eingehaust sein können.

Eine derart ausgebildete Steuereinrichtung 37 ermöglicht es somit, in der einzigen ersten Steuereinheit 61 die Funktionen des Generierens des virtuellen Hintergrunds 21 und des Projizierens des virtuellen Hintergrunds 21 auf die aktive Beleuchtungseinrichtung 31 der Hintergrund-Wiedergabeeinrichtung 15 zu vereinen. Insofern muss der virtuelle Hintergrund 21 nicht von einem 3D-Rechner 63 zu einer zentralen Steuerung 64 der Hintergrund-Wiedergabeeinrichtung 15 (Fig. 3) übermittelt werden, welche den virtuellen Hintergrund 21 bzw. die diesen repräsentierenden Daten zunächst verarbeiten muss, um daraufhin die Projektion P ermitteln zu können. Durch das Zusammenlegen dieser Prozessschritte in die einzige erste Steuereinheit 61 (Fig. 4) können insbesondere die erforderlichen Datenübertragungen minimiert werden, was eine schnellere und einfachere Ansteuerung der Hintergrund-Wiedergabeeinrichtung 15 ermöglichen kann. Zudem können das Generieren des virtuellen Hintergrunds 21 und das Ermitteln der Projektion P des virtuellen Hintergrunds 21 auf die aktive Beleuchtungseinrichtung 31 durch das Ausführen der erforderlichen Rechenschritte in einer einzigen ersten Steuereinheit 61 präzise aufeinander abgestimmt werden, so dass auch eventuell auftretende Fehler in der Darstellung 19 des virtuellen Hintergrunds 21 leichter nachvollzogen werden können. Die Konzentration der Funktionen des Generierens des virtuellen Hintergrunds 21 und des Ermittelns der Projektion P in die einzige erste Steuereinheit 61 ermöglicht zudem, diese rechenintensiven Funktionen in ein externes Rechenzentrum zu verlegen und auf dessen Kapazitäten zurückzugreifen. Dazu können die zweiten Steuereinheiten 65 insbesondere über ein Netzwerk mit der ersten Steuereinheit 61 verknüpft sein.

Generell können die zweiten Steuereinheiten 65 und die erste Steuereinheit 61 über ein Netzwerk miteinander verknüpft sein (drahtgebunden oder drahtlos). Für ein derartiges Netzwerk kann ein eigener Router vorgesehen sein (in Fig. 4 nicht dargestellt), der mit den zweiten Steuereinheiten 65 und der ersten Steuereinheit 61 direkt oder indirekt verbunden ist. Die erste Steuereinheit 61 kann dazu ausgebildet sein, das Vorhandensein der jeweiligen zweiten Steuereinheit 65 zu erkennen, um eine automatische Grundkonfiguration des Systems aus den mehreren Paneelen 41 mit den zweiten Steuereinheiten 65 zu ermöglichen. Beispielsweise kann das Erkennen der zweiten Steuereinheiten 65 in dem Netzwerk anhand von individuellen Adressen der zweiten Steuereinheiten 65 innerhalb des Netzwerks erfolgen.

Zusätzlich zu dem reinen Ermitteln einer Projektion P auf die aktive Beleuchtungseinrichtung 31 der Hintergrund-Wiedergabeeinrichtung 15 kann die erste Steuereinheit 61 auch dazu ausgebildet sein, die Projektion P auf die aktive Beleuchtungseinrichtung 31 und/oder die Hintergrund-Wiedergabeeinrichtung 15 zu skalieren. Beispielsweise können in dem Modell 39 und entsprechend in dem von der ersten Steuereinheit 61 generierten virtuellen Hintergrund 21 der realen Landschaft entsprechende Längen- und/oder Größenverhältnisse gespeichert sein, so dass diese auch in der Projektion P noch enthalten sein können. Um eine Wiedergabe der Darstellung 19 des virtuellen Hintergrunds 21 an der Hintergrund-Wiedergabeeinrichtung 15 zu ermöglichen, kann die erste Steuereinheit 61 die ermittelte Projektion P daher auf die Maße der Hintergrund-Wiedergabeeinrichtung und/oder der aktiven Beleuchtungseinrichtung 31 skalieren.

Ferner kann die Steuereinheit 61 dazu ausgebildet sein, die Projektion P des virtuellen Hintergrunds 21 auf einen Farbraum der aktiven Beleuchtungseinrichtung 31 abzubilden. Insgesamt kann die erste Steuereinheit 61 somit dazu ausgebildet sein, den virtuellen Hintergrund 21 zu generieren und, insbesondere im Zuge des Ermittelns der Projektion P, derart aufzuarbeiten, dass unmittelbar eine Wiedergabe der Darstellung 19 des virtuellen Hintergrunds 21 und der Hintergrund-Wiedergabeeinrichtung 15 erfolgen kann. Dementsprechend kann die erste Steuereinheit 61 auch dazu ausgebildet sein, durch das Ermitteln und Übertragen jeweiliger Abschnitte P1 und P2 die Projektion auf die mehreren Paneele 41 aufzuteilen.

Die zweiten Steuereinheiten 65 können zudem dazu ausgebildet sein, eine Information C über eine Anordnung und/oder Geometrie des jeweiligen zugeordneten Paneels 41 an die erste Steuereinheit 61 zu übermitteln. Die erste Steuereinheit 61 kann dazu ausgebildet sein, den an die jeweilige zweite Steuereinheit 65 zu übermittelnden Abschnitt P1 oder P2 in Abhängigkeit von dieser Information C anzupassen. Insbesondere kann der ersten Steuereinheit 61 über die Information C mitgeteilt werden, wie die einzelnen Paneele 41 relativ zueinander angeordnet sind, so dass die Abschnitte P1 und P2 der Projektion P korrekt an die zweiten Steuereinheiten 65 der nebeneinander angeordneten Paneele 41 übermittelt werden können. Darüber hinaus kann die erste Steuereinheit 61 durch eine Übermittlung von solchen Informationen C flexibel mit verschiedenen aktiven Beleuchtungseinrichtungen 31 genutzt werden, indem beispielsweise eine aktuelle Anzahl und/oder eine aktuelle Anordnung der Paneele 41, auf welche der virtuelle Hintergrund 21 zu projizieren ist, von der ersten Steuereinheit 61 berücksichtigt werden können/kann. Die Projektion P des virtuellen Hintergrunds 21 kann dadurch von der ersten Steuereinheit 61 entsprechend ermittelt und an die Paneele 41 verteilt werden kann. Dies ermöglicht insbesondere auch eine Cloud-basierte Steuerung der Hintergrund-Wiedergabeeinrichtung 15.

Alternativ zu einem Generieren des virtuellen Hintergrunds 21 anhand eines Modells M kann es auch vorgesehen sein, dass die erste Steuereinheit 61 über eine Einleseeinrichtung 71 einen virtuellen Hintergrund 21 empfängt. Beispielsweise kann die Einleseeinrichtung 71 als ein DVD-Player ausgebildet sein, so dass die erste Steuereinheit 61 beispielsweise eine Bewegtbildsequenz als virtuellen Hintergrund 21 empfangen und auf die aktive Beleuchtungseinrichtung 31 projizieren kann, um eine Wiedergabe einer Darstellung 19 des virtuellen Hintergrunds 21 an der Hintergrund-Wiedergabeeinrichtung 15 zu ermöglichen.

Um die Abschnitte P1 und P2 an die zweiten Steuereinheiten 65 übertragen zu können, ist die erste Steuereinheit 61 über eine Ethernet-Verbindung 69 mit den zweiten Steuereinheiten 65 verbunden. Insbesondere kann es dies ermöglichen, die Abschnitte P1 und P2 bzw. die entsprechenden Bilddaten in einem grundsätzlich beliebigen und beispielsweise von den zweiten Steuereinheiten 65 angeforderten Format zu übertragen. Darüber hinaus kann die erste Steuereinheit 61 dazu ausgebildet sein, zusätzlich zu den Abschnitten P1 und P2 einen jeweiligen Zeitstempel T an die zweiten Steuereinheiten 65 zu übertragen, welcher einem Zeitpunkt entsprechen bzw. einen Zeitpunkt definieren kann, zu welchem die zweiten Steuereinheiten 65 die jeweiligen Paneele 41 zum Wiedergeben der Darstellung 19 des virtuellen Hintergrunds 21 ansteuern sollen. Dadurch kann erreicht werden, dass trotz des Verteilens der Projektion P auf mehrere Paneele 41 die Darstellung 19 zeitgleich an sämtlichen Bereichen der Hintergrund-Wiedergabeeinrichtung 15 wiedergegeben wird.

Zudem kann die Ethernet-Verbindung 69 dazu vorgesehen sein, eine Übertragung von Kalibrierdaten K von den jeweiligen Steuereinheiten 65 an die erste Steuereinheit 61 zu ermöglichen. Beispielsweise können solche Kalibrierdaten K eine jeweilige Ausrichtung des zugeordneten Paneels 41 im Raum umfassen, wobei die erste Steuereinheit 61 insbesondere dazu ausgebildet sein kann, solche Kalibrierdaten K bei dem Ermitteln der Projektion P des virtuellen Hintergrunds 21 auf die aktive Beleuchtungseinrichtung 31 zu berücksichtigen. Alternativ oder zusätzlich können die Kalibrierdaten K beispielsweise Informationen über einen Farbraum der Bildpunktelemente 35 des jeweiligen Paneels 41 umfassen.

Die zweiten Steuereinheiten 65 sind ferner mit mehreren dritten Steuereinheiten 67 verbunden, welche zum unmittelbaren Ansteuern jeweiliger zugeordneter Bildpunktelemente 35 vorgesehen sein können. Die dritten Steuereinheiten 67 können insofern insbesondere als LED-Treiber oder Treiber-Chips ausgebildet sein, um beispielsweise eine Gruppe zugeordneter Bildpunktelemente 35 bzw. Leuchtdioden 44 und insbesondere eine jeweilige der bereits genannten Leuchtdiodeneinheiten ansteuern zu können. Insofern können die zweiten Steuereinheiten 65 beispielsweise jeweilige an den Bildpunktelementen 35 wiederzugebende Bildinformationen und/oder Farbeinstellungen und/oder Helligkeitseinstellungen an die dritten Steuereinheiten 67 übertragen, wobei diese letztlich die Ansteuerung der Bildpunktelemente 35 durchführen können.

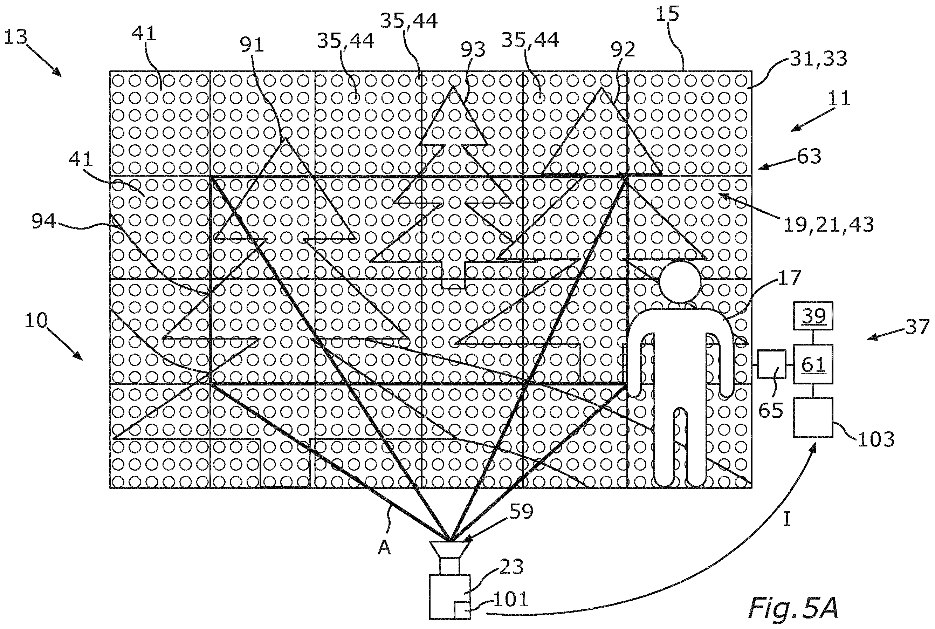

Wie bereits erläutert, weist die Kamera 23 ferner eine Schnittstelle 101 auf, um Informationen I an eine Schnittstelle 103 der Steuereinrichtung 37 der Hintergrund-Wiedergabeeinrichtung 15 übermitteln zu können. Insbesondere ist die Schnittstelle 103 bei den anhand der Fig. 5A bis 5C veranschaulichten Ausführungsbeispielen mit der ersten Steuereinheit 61 der Hintergrund-Wiedergabeeinrichtung 15 verbunden und die Schnittstellen 101 und 103 können zu einer kabellosen und/oder kabelgebundenen Kommunikation ausgebildet sein.

Wie Fig. 5A veranschaulicht, kann mittels der Kamera 23 grundsätzlich ein Abschnitt der Hintergrund-Wiedergabeeinrichtung 15 abgebildet werden, welcher sich in einem jeweiligen Abbildungsfenster A befindet, das auch als Frustum oder Sehpyramide bezeichnet bzw. dadurch definiert sein kann. Insbesondere kann die Kamera 23 dazu ausgebildet sein, eine Information I über dieses Abbildungsfenster A an die Schnittstelle 103 und somit die erste Steuereinheit 61 der Steuereinrichtung 37 der Hintergrund-Wiedergabeeinrichtung 15 zu übermitteln, wobei die erste Steuereinheit 61 dazu ausgebildet sein kann, das Abbildungsfenster A der Kamera 23 bei der Übermittlung der Abschnitte P1 und P2 an die jeweiligen zweiten Steuereinheiten 65 zu berücksichtigen.

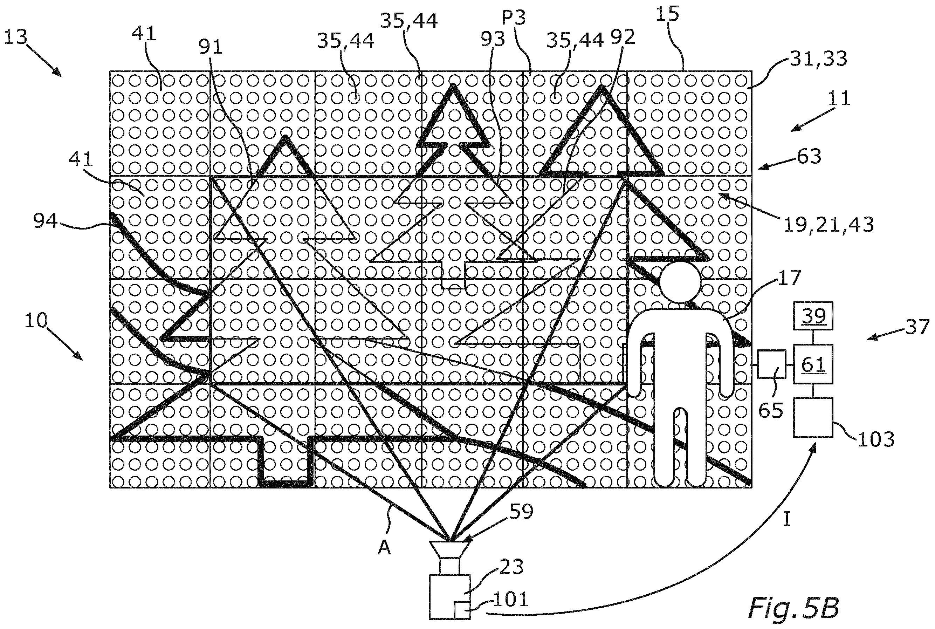

Wie Fig. 5B veranschaulicht, kann die erste Steuereinheit 61 beispielsweise dazu ausgebildet sein, den jeweiligen Abschnitt P1 oder P2 unverändert an solche Paneele 41 bzw. die zugeordneten zweiten Steuereinheiten 65 zu übermitteln, welche sich innerhalb des Abbildungsfensters A der Kamera 23 befinden. Hingegen kann die erste Steuereinheit 61 dazu ausgebildet sein, jeweilige Abschnitte P3 der Projektion P, welche sich außerhalb des Abbildungsfensters A der Kamera 23 befinden, in lediglich verringerter Auflösung an die jeweiligen zweiten Steuereinheiten 65 zu übermitteln. Entsprechend können die Abschnitte P3 auch mit verringerter Auflösung an der Hintergrund-Wiedergabeeinrichtung 15 bzw. mittels der aktiven Beleuchtungseinrichtung 31 wiedergegeben werden.

Eine solche Wiedergabe mit verringerter Auflösung kann es insbesondere ermöglichen, die sich außerhalb des Abbildungsfensters A der Kamera 23 befindenden Abschnitten P3 entsprechenden Bilddaten komprimiert an die jeweiligen zweiten Steuereinheiten 65 zu übertragen, welche zudem Paneelen 41 zugeordnet sein können, die sich außerhalb des Abbildungsfensters A der Kamera 23 befinden. Insgesamt kann dadurch eine Kompression und Verringerung der zu übertragenden Bilddaten erreicht werden, um eine schnellere Ansteuerung der Hintergrund-Wiedergabeeinrichtung 15 zu ermöglichen. Eine solche Wiedergabe mit verringerter Auflösung kann es zudem insbesondere ermöglichen, dass das reale Motiv 17 nach wie vor durch die Hintergrund-Wiedergabeeinrichtung 15 und insbesondere auf den virtuellen Hintergrund 21 abgestimmt beleuchtet wird, indem auch an den sich außerhalb des Abbildungsfensters A befindenden Paneelen 41 eine sich an den von der Kamera 23 abgebildeten Teil der Darstellung 19 des virtuellen Hintergrunds 21 anfügende Darstellung wiedergegeben werden kann.

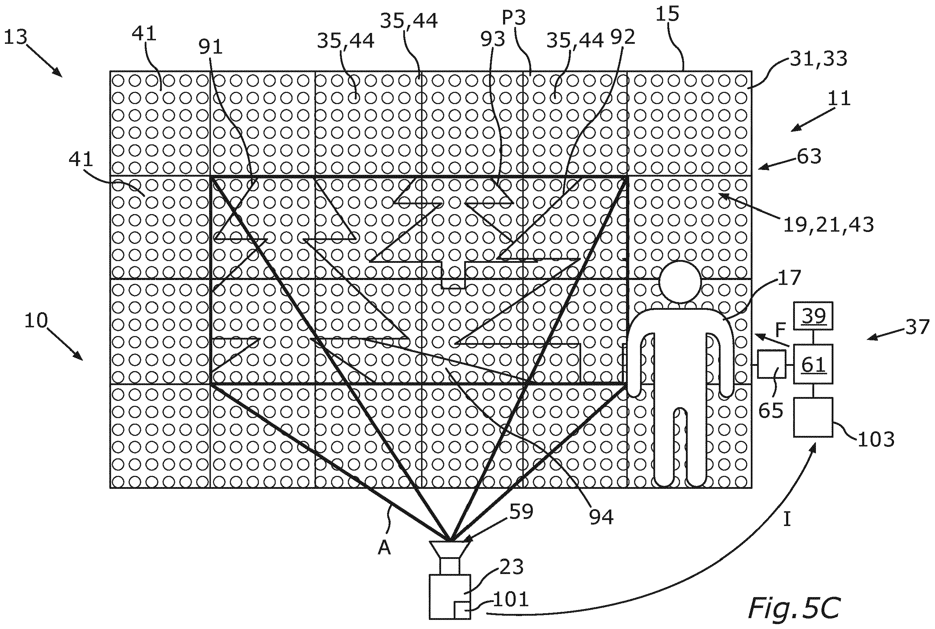

Wie Fig. 5C zeigt, kann es jedoch auch vorgesehen sein, dass die erste Steuereinheit 61 dazu ausgebildet ist, außerhalb des Abbildungsfensters A der Kamera 23 liegende Abschnitte P3 der Projektion an der Hintergrund-Wiedergabeeinrichtung 15 nicht wiederzugeben bzw. die entsprechenden Abschnitte P3 nicht an die jeweiligen zweiten Steuereinheiten 65 zu übermitteln. Alternativ oder zusätzlich kann die erste Steuereinheit 61 auch dazu ausgebildet sein, für au-βerhalb des Abbildungsfensters A der Kamera 23 liegende Abschnitte P3 bzw. Paneele 41 ausschließlich einen Beleuchtungsbefehl F an die jeweilige zweite Steuereinheit 65 zu übermitteln, wobei die zweite Steuereinheit 65 dazu ausgebildet sein kann, das jeweilige Paneel 41 in Ansprechen auf den Beleuchtungsbefehl F zum Beleuchten des realen Motivs 17 anzusteuern. Auch hierdurch kann die zu übertragende Datenmenge komprimiert werden, indem außerhalb des Abbildungsfensters A liegende Abschnitte P3 nicht als detaillierte Bilddaten übertragen werden, sondern lediglich ein Beleuchtungsbefehl F oder keine Daten übermittelt werden.

### Bezuaszeichenliste

- 1: Bildsensor
- 10: Aufnahmesystem
- 11: Hintergrundwiedergabesystem
- 13: Bildaufnahmestudio
- 15: Hintergrund-Wiedergabeeinrichtung
- 17: reales Motiv, Schauspieler
- 19: Darstellung
- 21: virtueller Hintergrund
- 23: Kamera
- 31: Beleuchtungseinrichtung
- 33: LED-Wand
- 35: Bildpunktelement
- 37: Steuereinrichtung
- 39: Speicher
- 41: Paneel
- 43: dreidimensionale Szene
- 44: Leuchtdiode
- 47: Speicher
- 49: Wiedergabeeinrichtung
- 51: Eingabeeinrichtung
- 53: Kamerakörper
- 59: Kameraobjektiv, Wechselobjektiv
- 61: erste Steuereinheit
- 63: 3D-Rechner
- 64: zentrale Steuerung
- 65: zweite Steuereinheit
- 66: Paneel-Steuerung
- 67: dritte Steuereinheit
- 68: Bildpunktelement-Treiber
- 69: Ethernet-Verbindung
- 71: Einleseeinrichtung
- 79: Sucher
- 81: Objektivring
- 83: Objektiv-Stellmotor
- 85: Objektivring-Antriebseinheit
- 87: Haltestange
- 91: erstes Objekt
- 92: zweites Objekt
- 93: drittes Objekt
- 94: viertes Objekt
- 97: Ausleseschaltung
- 99: Signalausgang
- 101: Schnittstelle
- 103: Schnittstelle
- A: Abbildungsfenster
- B: Bilddatensatz
- C: Information
- F: Beleuchtungsbefehl
- I: Information
- K: Kalibrierdaten
- M: Modell
- P: Projektion
- P1: Abschnitt der Projektion
- P2: Abschnitt der Projektion
- P3: Abschnitt der Projektion
- T: Zeitstempel
- x: Koordinate
- y: Koordinate
- z: Koordinate

## Patentansprüche

1. Hintergrund-Wiedergabeeinrichtung (15) für ein virtuelles Bildaufnahmestudio (13), welche dazu ausgebildet ist, für eine Aufnahme mittels einer zugeordneten Kamera (23) hinter einem realen Motiv (17) eine Darstellung (19) eines virtuellen Hintergrunds (21) wiederzugeben,
wobei die Hintergrund-Wiedergabeeinrichtung (15) eine aktive Beleuchtungseinrichtung (31) aufweist, welche zumindest ein Paneel (41) mit einer Vielzahl von Bildpunktelementen (35) in einer zumindest zweidimensionalen Anordnung umfasst, und wobei die Hintergrund-Wiedergabeeinrichtung (15) eine Steuereinrichtung (37) aufweist,
wobei die Steuereinrichtung (37) eine einzige erste Steuereinheit (61) und zumindest eine zweite Steuereinheit (65) umfasst,
wobei die erste Steuereinheit (61) dazu ausgebildet ist,
- den virtuellen Hintergrund (21) zu generieren,
- eine Projektion (P) des virtuellen Hintergrunds (21) auf die aktive Beleuchtungseinrichtung (31) zu ermitteln, und
- zumindest einen Abschnitt (P1, P2, P3) der ermittelten Projektion (P) an die zumindest eine zweite Steuereinheit (65) zu übermitteln,
wobei die zumindest eine zweite Steuereinheit (65) dazu ausgebildet ist, die aktive Beleuchtungseinrichtung (31) zum Darstellen des zumindest einen Abschnitts (P1, P2, P3) der ermittelten Projektion (P) des virtuellen Hintergrunds (21) anzusteuern.

2. Hintergrund-Wiedergabeeinrichtung (15) nach Anspruch 1,
wobei die Hintergrund-Wiedergabeeinrichtung (15) als eine LED-Wand (33) ausgebildet ist, die eine Vielzahl von Leuchtdioden (44) aufweist, welche die Bildpunktelemente (35) bilden.

3. Hintergrund-Wiedergabeeinrichtung (15) nach Anspruch 1 oder 2,
wobei die erste Steuereinheit (61) dazu ausgebildet ist, den virtuellen Hintergrund (21) auf die aktive Beleuchtungseinrichtung (31) zu skalieren; und/oder
wobei die erste Steuereinheit (61) dazu ausgebildet ist, den virtuellen Hintergrund (21) auf einen Farbraum der aktiven Beleuchtungseinrichtung (31) abzubilden; und/oder wobei die erste Steuereinheit (61) dazu ausgebildet ist, über eine Ethernet-Verbindung (69) mit der zumindest einen zweiten Steuereinheit (65) zu kommunizieren.

4. Hintergrund-Wiedergabeeinrichtung (15) nach einem der vorhergehenden Ansprüche, wobei die zumindest eine zweite Steuereinheit (65) dazu ausgebildet ist, eine Information (C) über eine Geometrie und/oder Anordnung des zumindest einen Paneels (41) an die erste Steuereinheit (61) zu übermitteln, wobei die erste Steuereinheit (61) dazu ausgebildet ist, den zumindest einen Abschnitt (P1, P2, P3) der ermittelten Projektion (P) des virtuellen Hintergrunds (21) in Abhängigkeit von der Information (C) anzupassen.

5. Hintergrund-Wiedergabeeinrichtung (15) nach einem der vorhergehenden Ansprüche, wobei die Hintergrund-Wiedergabeeinrichtung (15) eine Schnittstelle (103) zum Empfangen einer Information (I) über ein Abbildungsfenster (A) der zugeordneten Kamera (23) aufweist, wobei die erste Steuereinheit (61) dazu ausgebildet ist, den zumindest einen Abschnitt (P1, P2, P3) der ermittelten Projektion (P) in Abhängigkeit von der Information (I) über das Abbildungsfenster (A) der Kamera (23) zu ermitteln und an die zumindest eine zweite Steuereinheit (65) zu übermitteln,
wobei die erste Steuereinheit (61) insbesondere dazu ausgebildet ist, den zumindest einen Abschnitt (P1, P2, P3) der ermittelten Projektion (P) an die zumindest eine zweite Steuereinheit (65) zu übermitteln, wenn sich der zumindest eine Abschnitt (P1, P2, P3) in dem Abbildungsfenster (A) der zugeordneten Kamera (23) befindet, und
wobei die erste Steuereinheit (61) insbesondere dazu ausgebildet ist, den zumindest einen Abschnitt (P1, P2, P3) vor dem Übermitteln an die zumindest eine zweite Steuereinheit (65) zu verändern oder den zumindest einen Abschnitt (P1, P2, P3) nicht an die zumindest eine zweite Steuereinheit (65) zu übermitteln, wenn sich der zumindest eine Abschnitt (P1, P2, P3) nicht in dem Abbildungsfenster (A) der zugeordneten Kamera (23) befindet.

6. Hintergrund-Wiedergabeeinrichtung (15) nach Anspruch 5,
wobei die erste Steuereinheit (61) dazu ausgebildet ist, einen Beleuchtungsbefehl (F) an die zumindest eine zweite Steuereinheit (65) zu übermitteln, wenn sich das zumindest eine Paneel (41) nicht in dem Abbildungsfenster (A) der zugeordneten Kamera (23) befindet, wobei die zumindest eine zweite Steuereinheit (65) dazu ausgebildet ist, die aktive Beleuchtungseinrichtung (31) in Ansprechen auf den Beleuchtungsbefehl (F) zum Beleuchten des realen Motivs (17) anzusteuern.

7. Hintergrund-Wiedergabeeinrichtung (15) nach Anspruch 5 oder 6,
wobei die erste Steuereinheit (61) dazu ausgebildet ist, den zumindest einen Abschnitt (P1, P2, P3) komprimiert, insbesondere mit verringerter Auflösung, an die zumindest eine zweite Steuereinheit (65) zu übermitteln, wenn sich das zumindest eine Paneel (41) und/oder der zumindest eine Abschnitt (P1, P2, P3) nicht in dem Abbildungsfenster (A) der zugeordneten Kamera (23) befindet.

8. Hintergrund-Wiedergabeeinrichtung (15) nach einem der vorhergehenden Ansprüche, wobei die erste Steuereinheit (61) mit einem Speicher (39) verbunden ist, in welchem ein Modell (M) des virtuellen Hintergrunds (21) gespeichert ist, und wobei die erste Steuereinheit (61) dazu ausgebildet ist, den virtuellen Hintergrund (21) anhand des Modells (M) zu generieren; und/oder
wobei die erste Steuereinheit (61) eine Einleseeinrichtung (71) aufweist, welche dazu ausgebildet ist, den virtuellen Hintergrund (21) oder einen Teil des virtuellen Hintergrunds (21) als externe Datei einzulesen.

9. Hintergrund-Wiedergabeeinrichtung (15) nach einem der vorhergehenden Ansprüche, wobei die zumindest eine zweite Steuereinheit (65) dazu ausgebildet ist, zumindest einen Teil der Vielzahl von Bildpunktelementen (35) individuell und/oder in Gruppen benachbarter Bildpunktelemente (35) anzusteuern; und/oder
wobei die Steuereinrichtung (37) mehrere dritte Steuereinheiten (67) umfasst und wobei die Bildpunktelemente (35) in mehrere Gruppen von Bildpunktelementen (35) eingeteilt sind, wobei jeder der mehreren Gruppen eine jeweilige dritte Steuereinheit (67) zugeordnet ist, wobei die zumindest eine zweite Steuereinheit (65) dazu ausgebildet ist, jedes Bildpunktelement (35) einer Gruppe individuell oder die Gruppen von Bildpunktelementen (35) mittels der jeweiligen zugeordneten dritten Steuereinheit (67) anzusteuern.

10. Hintergrund-Wiedergabeeinrichtung (15) nach einem der vorhergehenden Ansprüche, wobei die aktive Beleuchtungseinrichtung (31) mehrere Paneele (41) und mehrere zweite Steuereinheiten (65) umfasst,
wobei jedem der mehreren Paneele (41) eine jeweilige zweite Steuereinheit (65) zugeordnet ist, wobei die erste Steuereinheit (61) dazu ausgebildet ist, an jede der mehreren zweiten Steuereinheiten (65) einen jeweiligen Abschnitt (P1, P2, P3) der ermittelten Projektion (P) zu übermitteln, und wobei die mehreren zweiten Steuereinheiten (65) dazu ausgebildet sind, die Bildpunktelemente (35) des zugeordneten Paneels (41) zum Darstellen des jeweiligen Abschnitts (P1, P2, P3) der ermittelten Projektion (P) des virtuellen Hintergrunds (21) anzusteuern,
wobei jedes der mehreren Paneele (41) insbesondere rechteckig und randlos ausgebildet ist, und wobei die mehreren Paneele (41) insbesondere in einer zweidimensionalen Matrix angeordnet sind.

11. Hintergrund-Wiedergabeeinrichtung (15) nach Anspruch 10,
wobei die erste Steuereinheit (61) dazu ausgebildet ist, die jeweiligen Abschnitte (P1, P2, P3) mit einem gemeinsamen Zeitstempel (T) an die mehreren zweiten Steuereinheiten (65) zu übermitteln, wobei die mehreren zweiten Steuereinheiten (65) dazu ausgebildet sind, die Bildpunktelemente (35) der mehreren Paneele (41) zum Darstellen der jeweiligen Abschnitte (P1, P2, P3) zu einem durch den Zeitstempel (T) definierten Zeitpunkt anzusteuern.

12. Hintergrund-Wiedergabeeinrichtung (15) nach Anspruch 10 oder 11,
wobei die mehreren zweiten Steuereinheiten (65) dazu ausgebildet sind, Kalibierdaten (K) des jeweiligen zugeordneten Paneels (41) an die erste Steuereinheit (61) zu übertragen, wobei die erste Steuereinheit (61) dazu ausgebildet ist, die Projektion (P) des virtuellen Hintergrunds (21) in Abhängigkeit von den empfangenen Kalibrierdaten (K) zu ermitteln.

13. Hintergrund-Wiedergabeeinrichtung (15) nach einem der Ansprüche 10 bis 12,
wobei die mehreren zweiten Steuereinheiten (65) und die erste Steuereinheit (61) über ein Netzwerk miteinander verknüpft sind, wobei die erste Steuereinheit (61) dazu ausgebildet ist, das Vorhandensein einer jeweiligen der mehreren zweiten Steuereinheiten (65) in dem Netzwerk zu erkennen.

14. Aufnahmesystem (10) für ein virtuelles Bildaufnahmestudio (13), umfassend eine Kamera (23) und eine Hintergrund-Wiedergabeeinrichtung (15), insbesondere nach einem der vorhergehenden Ansprüche, welche dazu ausgebildet ist, hinter einem realen Motiv (17) eine Darstellung (19) eines virtuellen Hintergrunds (21) für eine Aufnahme mittels der Kamera (23) wiederzugeben,
wobei die Hintergrund-Wiedergabeeinrichtung (15) eine aktive Beleuchtungseinrichtung (31) aufweist, welche mehrere Paneele (41) mit einer Vielzahl von Bildpunktelementen (35) umfasst,
wobei die Kamera (23) dazu ausgebildet ist, eine Information (I) über ein Abbildungsfenster (A) an eine Schnittstelle (103) der Hintergrund-Wiedergabeeinrichtung (15) zu übermitteln, und wobei die Hintergrund-Wiedergabeeinrichtung (15) dazu ausgebildet ist, die Paneele (41) in Abhängigkeit von der übermittelten Information (I) über das Abbildungsfenster (A) selektiv zum Wiedergeben der Darstellung (19) des virtuellen Hintergrunds (21) anzusteuern;
wobei die Hintergrund-Wiedergabeeinrichtung (15) insbesondere dazu ausgebildet ist, die Darstellung (19) des virtuellen Hintergrunds (21) an sich außerhalb des Abbildungsfensters (A) befindenden Paneelen (41) nicht oder mit verringerter Auflösung wiederzugeben.

15. Verfahren zum Wiedergeben einer Darstellung (19) eines virtuellen Hintergrunds (21) mittels einer Hintergrund-Wiedergabeeinrichtung (15), insbesondere einer Hintergrund-Wiedergabeeinrichtung (15) nach einem der Ansprüche 1 bis 19, für eine Aufnahme mit einer Kamera (23) in einem virtuellen Bildaufnahmestudio (13),
wobei die Hintergrund-Wiedergabeeinrichtung (15) eine aktive Beleuchtungseinrichtung (31) aufweist, welche zumindest ein Paneel (41) mit einer Vielzahl von Bildpunktelementen (35) umfasst,
wobei mittels einer einzigen ersten Steuereinheit (61):
- der virtuelle Hintergrund (21) generiert wird,
- eine Projektion (P) des virtuellen Hintergrunds (21) auf die aktive Beleuchtungseinrichtung (31) ermittelt wird, und
- zumindest ein Abschnitt (P1, P2, P3) der ermittelten Projektion (P) an zumindest eine zweite Steuereinheit (65) übermittelt wird; und
wobei mittels der zumindest einen zweiten Steuereinheit (65) die aktive Beleuchtungseinrichtung (31) zum Darstellen des zumindest einen Abschnitts (P1, P2, P3) der ermittelten Projektion (P) des virtuellen Hintergrunds (21) angesteuert wird.
